# EUROPÄISCHE PATENTSCHRIFT

(11) **EP 0 590 377 B1**
(45) Veröffentlichungstag und Bekanntmachung des Hinweises auf die Patenterteilung: **19.11.1997**
(21) Anmeldenummer: 93114485.1
(22) Anmeldetag: 09.09.1993
(51) Int. Cl.: H02P 3/06, H01H 7/02, H01H 21/52

(54) **Bremsschalter für einen Elektromotor**
Braking switch for an electric motor
Commutateur de freinage pour un moteur électrique

(30) Priorität: 26.09.1992 DE 4232402
(43) Veröffentlichungstag der Anmeldung: 06.04.1994
(73) Patentinhaber: Marquardt GmbH, 78604 Rietheim-Weilheim (DE)
(72) Erfinder: Geiger, August, D-78607 Talheim (DE); Knappe, Alexander, D-78604 Rietheim (DE); Bufe, Michael, D-78604 Rietheim (DE)
(74) Vertreter: Patentanwälte Eisele, Otten & Roth

(56) Entgegenhaltungen:
- DE-A- 2 002 768
- DE-A- 3 539 841
- DE-A- 3 636 555
- DE-A- 4 022 637
- DE-C- 3 546 719
- US-A- 2 432 682
- US-A- 3 970 807
- US-A- 4 442 363

## Beschreibung

Die Erfindung betrifft einen zum Einsatz in einer Bremsschaltung geeigneten Bremsschalter für einen Elektromotor nach dem Oberbegriff des Patentanspruchs 1.

Elektromotoren besitzen aufgrund ihrer kinetischen Energie nach dem Abschalten der Netzspannung eine längere Auslaufzeit. Insbesondere beim Einsatz in Elektrohandwerkzeugen, wie Winkelschleifer, Kettensägen, Elektrohobel, u. dgl. ist es wegen der möglichen Verletzungsgefahr für den Bediener erwünscht, beim Abschalten des Elektromotors für ein schnelles Abbremsen desselben und damit des Elektrohandwerkzeugs zu sorgen. üblicherweise erfolgt das Abbremsen des Elektromotors mittels einer Bremsschaltung, in der beim Abschalten, d.h. beim Umschalten vom Motor- in den Bremsbetrieb, der Anker und die Feldwicklung in einen Bremsstromkreis geschaltet werden. In der Bremsschaltung wird dann die kinetische Energie in Wärme umgewandelt und an die Umgebungsluft abgegeben.

Aus DE-PS 35 46 719 ist eine derartige Bremsschaltung für einen elektrischen Universalmotor bekannt, bei der ein Bremsstromkreis gebildet wird, indem der Anker des Elektromotors im ausgeschalteten Zustand über das Feld kurzgeschlossen ist. Dazu ist ein aus zwei Umschaltern S1, S2 bestehender Bremsschalter vorgesehen, deren Anschlüsse für die Schaltkontakte mit den beiden Anschlüssen der Feldwicklung verbunden sind. Die Anschlüsse für die Ruhekontakte der beiden Umschalter S1, S2 sind so mit einem Netzpol und den beiden Seiten der Ankerwicklung verschaltet, daß in ausgeschaltetem Zustand des Elektromotors die Polarität der Ankerwicklung in Bezug auf die Feldwicklung entgegengesetzt zu derjenigen im eingeschalteten Zustand des Elektromotors ist.

Zur Vermeidung einer Zerstörung der Kontakte des Bremsschalters aufgrund von hohen Strömen im Bremsstromkreis beim Abschalten des Elektromotors oder aufgrund von Netzkurzschlüssen wird vorgeschlagen, daß die Schaltvorgänge im Bremsschalter zeitversetzt stattfinden. Beim Umschalten vom Motor- in den Bremsbetrieb wird zunächst der netznahe Umschalter S1 und dann der netzferne Umschalter S2 betätigt. Beim Umschalten vom Brems- in den Motorbetrieb wird zuerst der netzferne Umschalter S2 und dann der netznahe Umschalter S1S1 betätigt.

Weiter sind elektronische Schaltungen bekannt, die im Bremsstromkreis der Bremsschaltung angeordnet sind und die der Regelung der Bremsung des Elektromotors dienen. Solche Bremselektroniken werden beispielsweise in der DE-OS 35 39 841, DE-OS 36 36 555 und der DE-OS 40 22 637 beschrieben. Zum Bremsschalter, der wiederum aus zwei Umschaltern besteht, und insbesondere zur Reihenfolge der Schaltvorgänge der beiden Umschalter werden in diesen Offenlegungsschriften jedoch keine näheren Aussagen gemacht.

Es hat sich gezeigt, daß bei einer Bremsschaltung mit einem Bremsschalter der angegebenen Art, beim Umschalten vom Motor-in den Bremsbetrieb Fehlbremsungen auftreten können, insbesondere bei der Verwendung einer Bremselektronik. In einem derartigen Fall läuft dann der Elektromotor ungebremst aus. Es ist unmittelbar ersichtlich, daß schon aus Sicherheitsgründen eine solche Schaltung mit einem Bremsschalter, bei der keine vollständige Gewähr für ein fehlerfreies Bremsverhalten gegeben ist, als Bremsschaltung ungeeignet ist.

Weiter hat es sich herausgestellt, daß der in der DE-PS 35 46 719 beschriebene Bremsschalter bereits nach kurzer Betriebsdauer zu Ausfällen aufgrund von Kontaktabbrand neigt. Besonders beim Einsatz an Elektromotoren mit höherer Leistung, beispielsweise über 1200 W, treten Verschweissungen der Kontakte innerhalb kürzester Zeit auf und der Bremsschalter wird unbrauchbar. Auch wenn häufig vom Bremsbetrieb unmittelbar in den Motorbetrieb zurückgeschaltet wird, ohne daß ein Stillstand des Motors abgewartet wird, tritt dieses Problem in erheblichem Umfang auf.

Der Erfindung liegt die Aufqabe zugrunde, einen betriebssicheren Bremsschalter zu schaffen, wobei eine vorzeitige Zerstörung des Bremsschalters auch bei Elektromotoren mit höherer Leistung nicht befürchtet werden muß. Der Bremsschalter soll insbesondere auch zur Verwendung mit einer Bremselektronik geeignet sein.

Diese Aufgabe wird bei einem gattungsgemäßen Bremsschalter durch die kennzeichnenden Merkmale des Anspruchs 1 gelöst.

Weitere vorteilhafte Ausgestaltungen der Erfindung sind Gegenstand der Unteransprüche.

Die mit der Erfindung erzielten Vorteile bestehen insbesondere darin, daß ein Bremsschalter angegeben wird, der sehr ausfallsicher ist. Eine Gefährdung des Benutzers aufgrund von Fehlbremsungen kann ausgeschlossen werden. Der erfindungsgemäße Bremsschalter ist universell verwendbar und läßt sich auch bei Elektromotoren höherer Leistung einsetzen.

Vorzeitige Ausfälle aufgrund von Verschweissungen oder Kontaktabbrand treten beim Bremsschalter nicht auf.
Gleichzeitig wird eine Überbelastung des Elektromotors im Bremsbetrieb vermieden und eine weitgehende Schonung desselben erreicht, was letztendlich zur Erhöhung der Lebensdauer des Elektromotors führt.

Ein Ausführungsbeispiel der Erfindung ist in den Zeichnungen dargestellt und wird im folgenden näher beschrieben. Es zeigen
- Fig. 1: das Prinzipschaltbild eines in einer Bremsschaltung mit Bremselektronik für einen Elektromotor angeordneten Bremsschalters mit Schalterstellung für den Motorbetrieb,
- Fig. 2: das Schaltbild eines Bremsschalters gemäß Fig. 1 mit Schalterstellung für den Bremsbetrieb,
- Fig. 3: den Stromfluß im Bremsstromkreis während des Bremsbetriebs bei gesperrter Bremselektronik,
- Fig. 4: den Stromfluß im Bremsstromkreis während des Bremsbetriebs bei leitender Bremselektronik,
- Fig. 5: einen Schnitt durch einen elektrischen Schalter zum Einsatz in der Bremsschaltung,
- Fig. 6: einen Schnitt gemäß der Linie 6-6 aus Fig. 5,
- Fig. 7-9: einen Detailausschnitt des elektrischen Schalters gemäß Fig. 5, wobei die Verzögerungseinrichtung in verschiedenen Stellungen während des Umschaltens vom Motor- in den Bremsbetrieb zu sehen ist,
- Fig. 10: einen Detailausschnitt der Verzögerungseinrichtung gemäß Fig. 8 in vergrößerter Darstellung während des Umschaltens vom Motor- in den Bremsbetrieb,
- Fig. 11: einen Detailausschnitt der Verzögerungseinrichtung in vergrößerter Darstellung wie in Fig. 10 während des Umschaltens vom Brems- in den Motorbetrieb und

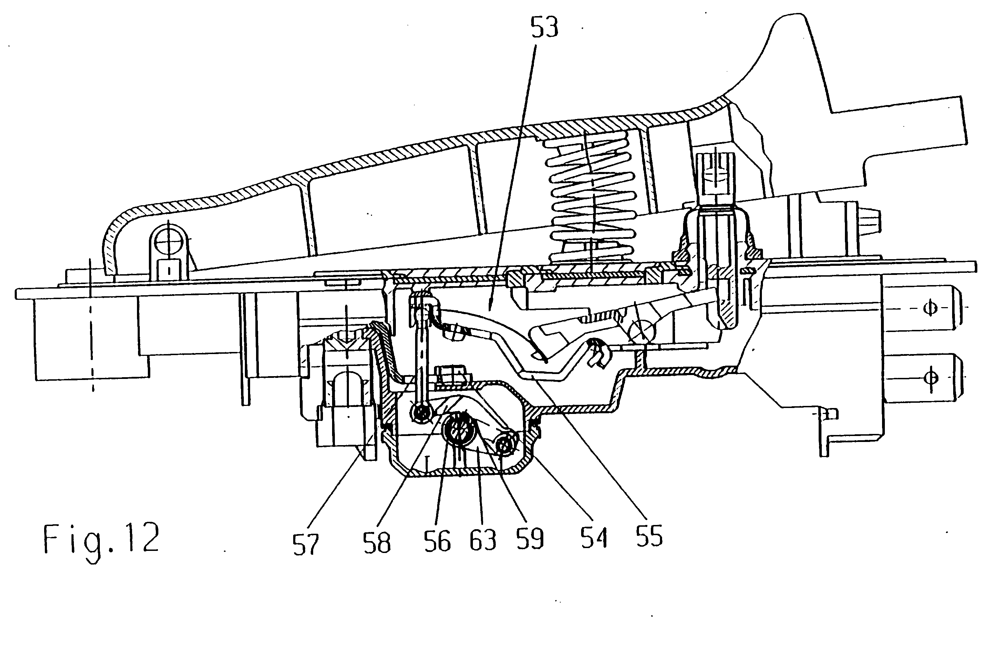

- Fig. 12: einen Schnitt entlang der Linie 12-12 aus Fig. 6.

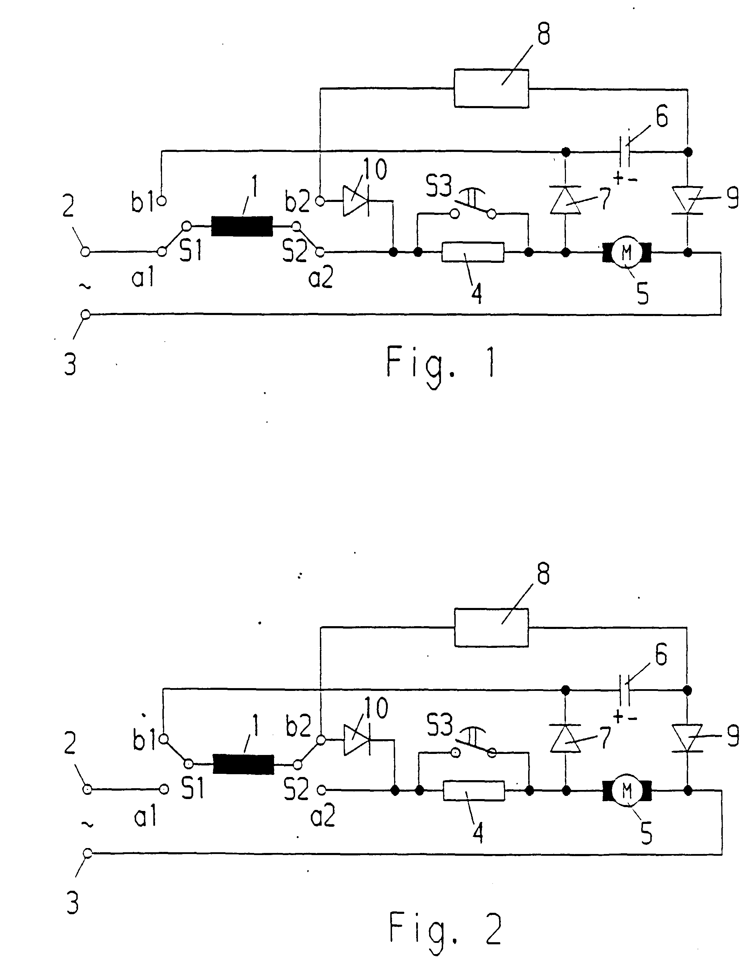

In Fig. 1 ist die Schaltung eines elektrischen Universalmotors, wie er für Elektrohandwerkzeuge, beispielsweise Bohrmaschinen, Winkelschleifer, Elektrohobel, elektrische Heckenscheren, u. dgl. eingesetzt wird, in der Stellung des Motorbetriebs gezeigt.

Der Elektromotor besitzt eine Feldwicklung 1, an deren Anschlüsse zwei Umschalter S1 und S2 angeschaltet sind. Der Umschalter S1 schaltet zwischen zwei Kontakten a1, b1 um, wobei der Kontakt a1 die erste Verbindung zum Motorkreis darstellt. Bei dieser Verbindung handelt es sich um den einen Anschluß 2 der Versorgungsspannung, die von der Wechselspannung des Netzes gebildet wird. Der andere Kontakt b1 stellt den ersten Anschluß des Bremsstromkreises dar. Der Umschalter S2 schaltet zwischen zwei Kontakten a2, b2 um, wobei a2 wiederum die zweite Verbindung zum Motorkreis und b2 den zweiten Anschluß des Bremsstromkreises darstellt. In vorliegendem Ausführungsbeispiel handelt es sich somit beim Umschalter S1 um den netznahen Umschalter und beim Umschalter S2 um den netzfernen Umschalter. In Verbindung mit dem Kontakt a2 steht im Motorkreis der Widerstand 4, der mittels eines weiteren Schalters S3 überbrückt werden kann. In Reihe ist dann weiter die Ankerwicklung 5 und an dieser der andere Anschluß 3 der Versorgungsspannung geschaltet. Selbstverständlich ist es auch möglich eine weitere Feldwicklung zwischen Ankerwicklung 5 und Anschluß 3 oder zwischen der ersten Feldwicklung 1 und dem Schalter S2 zu schalten.

Bei der folgenden Beschreibung der Funktion der Schaltung im Motorbetrieb wird die vom Anschluß 2 ausgehende positive Halbwelle der Versorgungsspannung betrachtet. Für die negative Halbwelle verläuft die Stromrichtung entgegengesetzt, so daß sich nähere Ausführungen dazu erübrigen.

In der Anlaufphase des Motorbetriebs fließt der Strom vom Anschluß 2 über den Kontakt a1 des Umschalters S1, die Feldwicklung 1 und den Kontakt a2 des Umschalters S2 zum Widerstand 4, da der Schalter S3 noch geöffnet ist. Von dort fließt der Strom weiter zur Ankerwicklung 5 und dann schließlich zum Anschluß 3 der Versorgungsspannung. Der Widerstand 4 dient damit in der Anlaufphase als Vorwiderstand zur Begrenzung des Anlaufstroms. Nach Beendigung der Anlaufphase wird der Schalter S3 geschlossen und der Widerstand 4 somit überbrückt, so daß der Strom vom Umschalter S2 und dem Kontakt a2 direkt in die Ankerwicklung 5 ohne Begrenzung durch den Widerstand 4 fließt.

Parallel zur Ankerwicklung 5 ist ein Kondensator 6 über eine Diode 7 angeschaltet. Dieser Kondensator 6 dient als Startkondensator zur Einleitung des Bremsbetriebes, wie nachfolgend noch näher erläutert wird. Die Diode 7 ist mit ihrer Kathode an den Kondensator 6 angeschaltet, so daß dieser sich mit der in der Fig. 1 eingezeichneten Polarität im Motorbetrieb auflädt. Eine Entladung des Kondensators 6 während der negativen Halbwelle der Versorgungsspannung wird wiederum durch die Diode 7 verhindert.

Werden die beiden Umschalter S1 und S2 an ihre Kontakte b1 und b2 geschaltet, so befinden sich die Feldwicklung 1 und die Ankerwicklung 5 im Bremsstromkreis. In dieser Stellung des Bremsbetriebes der Umschalter S1 und S2 wirkt der Elektromotor als Generator. Dabei durchfließt der Strom im Bremsbetrieb die Feldwicklung 1 und die Ankerwicklung 5 in entgegengesetzter Richtung, während im Motorbetrieb die Feldwicklung 1 und die Ankerwicklung 5 in gleichsinniger Richtung durchflossen werden. Weiter ist im Bremsbetrieb auch der Schalter S3 geöffnet, so daß sich der Widerstand 4 ebenfalls im Bremsstromkreis befindet. Gegebenenfalls kann noch eine Bremselektronik 8 im Bremsstromkreis angeordnet sein, wie weiter in Fig. 2 zu sehen ist.

Unmittelbar nach Umschalten in den Bremsbetrieb entlädt sich der Kondensator 6, wobei ein Strom über die Verbindung am Kontakt b1 des Umschalters S1 durch die Feldwicklung 1, den Umschalter S2 zum Kontakt b2 fließt. Von dort fließt der Strom über die Bremselektronik 8 zurück zum Kondensator. Dadurch wird erreicht, daß die Feldwicklung 1 unabhängig von der jeweiligen Phase der Versorgungsspannung zu Beginn der Bremsung mit einer bestimmten Polarität erregt wird und zwar auch dann, wenn der Restmagnetismus in der Feldwicklung 1 für eine Erregung nicht mehr ausreicht oder eine falsche Polarität aufweist. Der aufgrund der Generatorwirkung des Elektromotors erzeugte Bremsgleichstrom weist dann ebenfalls die richtige Polarität auf und führt dann zur weiteren Selbsterregung der Feldwicklung 1 in der besagten Polarität in Bezug auf die Ankerwicklung 5. Eine Entladung des Kondensators 6 vom Kontakt b2 über den Widerstand 4 und der Ankerwicklung 5, was aufgrund der dann falschen Richtung in der Ankerwicklung 5 zu einer Fehlbremsung führen kann, wird durch eine zwischen dem negativen Pol des Kondensators 6 und dem dem Widerstand 4 abgewandten Anschluß der Ankerwicklung 5 geschaltete Diode 9 verhindert. Die Diode 9 ist zu diesem Zweck mit ihrer Anode am Kondensator 6 angeschaltet.

Nach Einsetzen der Selbsterregung fließt aufgrund der in der Ankerwicklung 5 induzierten Spannung des als Generator wirkenden Elektromotors ein Strom von der Ankerwicklung 5 über die Diode 7 zum Kontakt b1 und von dort über den Umschalter S1 in die Feldwicklung 1.

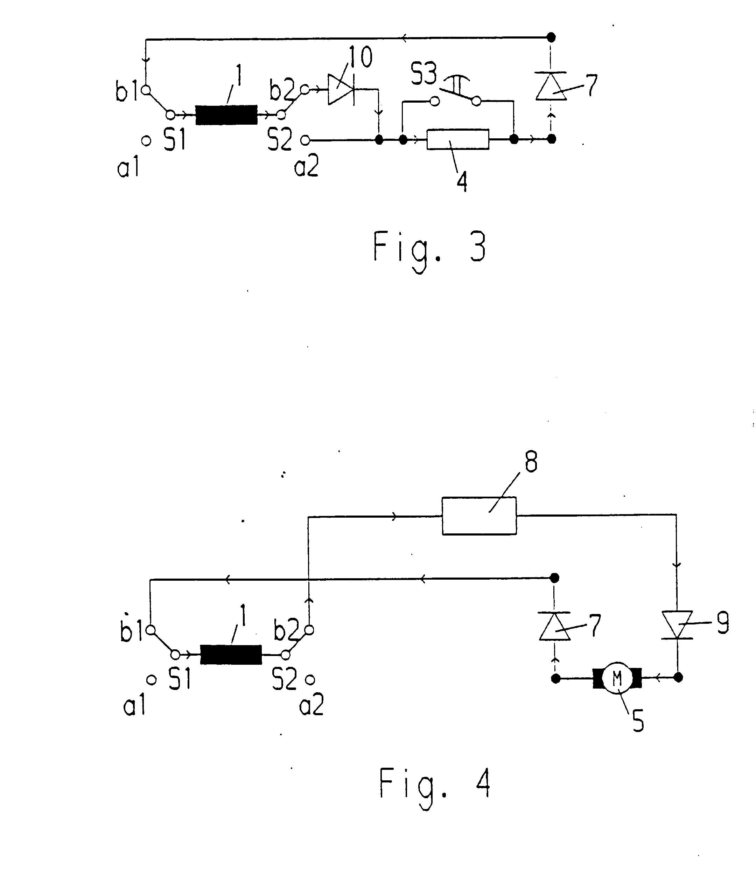

Von der Feldwicklung 1 fließt der Strom dann über den Umschalter S2 zum Kontakt b2, von dort durch die leitend geschaltete Bremselektronik 8 und dann zurück zur Ankerwicklung 5. Dieser erste Zweig des Bremsstromkreises im Bremsbetrieb ist mit Stromflußrichtung in Fig. 4 näher gezeigt. Wie man dort sieht, haben die Feldwicklung 1 und die Ankerwicklung 5 die richtige Polarität, d.h. der Strom fließt wie im Generatorbetrieb erforderlich in der Feldwicklung 1 entgegengesetzt zur Ankerwicklung 5.

Aufgrund der Generatorwirkung steigt der Strom in der Feldwicklung 1 immer weiter an. Hat er eine bestimmte obere Grenze erreicht, so wird die Bremselektronik 8 in den nichtleitenden Zustand versetzt und somit gesperrt. Damit muß der Strom am Kontakt b2 in den anderen zweiten Zweig des Bremsstromkreises fließen, der in Fig. 3 näher dargestellt ist. Wie dort zu sehen ist, fließt der Strom dann über die Diode 10 durch den Widerstand 4. Von dort fließt er über die Diode 7 weiter zum Kontakt b1 und über den Umschalter S1 zurück in die Feldwicklung 1.

Die Dioden 7, 9 und 10 sorgen somit auch dafür, daß der Strom im jeweiligen Zweig des Bremsstromkreises die für den Generatorbetrieb notwendige Polarität besitzt. Der zweite Zweig des Bremsstromkreises, den der Strom bei gesperrter Bremselektronik 8 durchläuft, wird auch Freilaufzweig genannt. Bei den Dioden 7 und 10, die im Freilaufzweig angeordnet sind, handelt es sich somit um sogenannte Freilaufdioden.

Da der Strom im Freilaufzweig über den Widerstand 4 fließt, wird dort Leistung in Wärme umgesetzt und der Strom nimmt ab. Der Widerstand 4 wirkt damit im Bremsbetrieb bei gesperrter Elektronik 8 als Bremswiderstand. Unterschreitet der Strom eine gewisse Grenze oder ist alternativ ein festgelegtes Zeitfenster abgelaufen, so wird die Bremselektronik 8 erneut in den leitenden Zustand versetzt, so daß der Strom wiederum in den ersten Zweig des Bremsstromkreises fließt. Aufgrund der Selbsterregung steigt dann der Strom im Bremsstromkreis wieder solange an, bis die Bremselektronik 8 erneut sperrt.

Die Bremselektronik 8 wird somit zwischen dem leitenden und nichtleitenden Zustand geschaltet, d.h. sie arbeitet getaktet und zwar solange bis die kinetische Energie des Elektromotors aufgrund der Ohm'schen Verluste im Bremsstromkreis aufgebraucht ist. Dadurch wird einerseits ein sehr schnelles Abbremsen des Elektromotors erreicht, andererseits ein zu abruptes Abbremsen des Elektromotors, wie es ohne Bremselektronik auftreten würde, jedoch vermieden.

Schaltungsanordnungen für solche getakteten Bremselektroniken sind bekannt, beispielsweise aus der DE-OS 36 36 555 oder der DE-OS 40 22 637 und brauchen an dieser Stelle daher nicht näher erläutert zu werden. Anstelle einer getaktet arbeitenden Bremselektronik kann auch eine kontinuierlich arbeitende Bremselektronik eingesetzt werden, die dafür sorgt, daß der im Bremsstromkreis fließende Strom nahezu konstant gehalten wird. Auch eine solche Bremselektronik ist beispielsweise aus der DE-OS 35 39 841 bekannt.

Im Motorbetrieb fließen im Motorkreis hohe Ströme, insbesondere wenn Elektromotoren höherer Leistung, beispielsweise ab 1200 W, verwendet werden, so daß beim Umschalten vom Motor- in den Bremsbetrieb an den Schaltkontakten der beiden Umschalter S1, S2 Lichtbögen auftreten können (man vergleiche dazu auch Fig. 1 oder 2). Diese Lichtbögen können einen Kurzschluß zum Netz bewirken. Besonders schädlich ist, wenn solch ein Lichtbogen lediglich an einem Schaltkontakt der Umschalter S1, S2 auftritt, da dann die gesamte Energie nur über diesen Kontakt fließt, wobei dann Kontaktabbrände dort aufgrund der Überlastung auftreten können. Letztendlich führt dies zu einer Zerstörung der Kontakte an den Umschaltern S1 oder S2 und damit zum frühen Ausfall der Umschalter S1 und S2. Weiter besteht die Gefahr, daß bei einem Netzkurzschluß sich der Kondensator 6 über den Kontakt b1 und den dort anstehenden Lichtbogen ins Netz am Anschluß 2 entlädt. Damit steht dann jedoch keine Energie zur Einleitung der Selbsterregung in der Feldwicklung 1 zur Verfügung und es kann zu Fehlbremsungen kommen, bei denen der Elektromotor ungebremst aus ausläuft.

Zur Vermeidung von solchermaßen schädlichen Auswirkungen werden die Schaltkontakte der beiden Umschalter S1, S2 in einer bestimmten erfindungsgemäßen Weise geschaltet. Zunächst öffnen beim Umschalten vom Motor- in den Bremsbetrieb die beiden Umschalter S1, S2 den Motorkreis im wesentlichen synchron, indem deren Schaltkontakte im wesentlichen gleichzeitig von ihren Kontakten a1, a2 wegbewegt werden. Anschließend bewegt sich der Schaltkontakt des netznahen Umschalters S1 gegenüber dem Schaltkontakt des netzfernen Umschalters S2 verzögert, d.h. die beiden Umschalter S1, S2 werden mit einem Zeitversatz geschaltet. Dadurch wird der Bremsstromkreis am netznahen Umschalter S1 später eingeschaltet.

Aufgrund der im Motorbetrieb fließenden hohen Ströme durch den Motorkreis kann eine partielle Verschweissung der Schaltkontakte mit den Kontakten a1, a2 an den Umschaltern S1, S2 auftreten. In einem solchen Fall könnte es dann vorkommen, daß der Schaltkontakt am Umschalter S1 bzw. S2 überhaupt nicht öffnen würde und aufgrund der Verschweissung mit dem Kontakt a1 bzw. a2 weiterhin in elektrischer Verbindung bleiben würde. Dann wäre der Bremsbetrieb nicht mehr einzuleiten. Durch das synchrone Öffnen der beiden Schaltkontakte beim Umschalten vom Motor- in den Bremsbetrieb wird nun erreicht, daß volle Abreißkraft für die Schaltkontakte zur Verfügung steht und eine Trennung der Schaltkontakte auf jeden Fall erfolgt, was bei einer sofortigen Verzögerung des Schaltkontaktes am Umschalter S1 nicht immer der Fall wäre.

Vorzugsweise findet das synchrone Öffnen der Schaltkontakte der Umschalter S1 und S2 auf einer Strecke von mindestens 5/10 mm unverzögert statt, bevor die Verzögerung des Schaltkontakts am Umschalter S1 erfolgt. Damit wird mit Sicherheit erreicht, daß tatsächlich eine Trennung der Schaltkontakte von den Kontakten a1, a2 und ein Öffnen der Umschalter S1, S2 erfolgt.

Falls Lichtbögen auftreten, wird weiter durch das synchrone Öffnen der beiden Schaltkontakte an den Umschaltern S1, S2 erreicht, daß jeweils zwei Lichtbögen gleichzeitig erzeugt werden, nämlich je einer am Umschalter S1 und S2. Dadurch wird der über die Lichtbögen geleitete Strom auf zwei Schaltstrecken verteilt und eine Überlastung eines einzelnen Kontaktes mit der schädlichen Folge eines Kontaktabbrandes mit Sicherheit vermieden. Würde man die beiden Schaltkontakte an den Umschaltern S1, S2 nicht synchron öffnen, so würde lediglich am zuerst geschalteten Kontakt ein Lichtbogen entstehen, wobei die volle Leistung dann über diese Schaltstrecke fließen würde. Die beiden Kontakte müssten dann jeweils für die doppelte Schaltleistung dimensioniert werden, was sowohl zu Platzals auch Kostenproblemen führen würde.

Bei einer Wechselspannung als Versorgungsspannung erlöscht der an den Schaltkontakten anstehende Lichtbogen nach einer gewissen Zeit von selbst, nämlich dann wenn die Phase der Netzspannung einen Nulldurchgang durchläuft. Weiter ist es ebenfalls möglich, am Umschalter S1 bzw. S2 zusätzliche Mittel, wie an sich bekannte Funkenlöschkammern u. dgl., anzuordnen, mit deren Hilfe der Lichtbogen gelöscht wird. Durch die nach dem synchronen Öffnen folgende Verzögerung des Schaltkontaktes des Umschalters S1 wird daher erreicht, daß der Lichtbogen zwischen dem Schaltkontakt und dem Kontakt a1 des Umschalters S1 gelöscht ist, bevor der Schaltkontakt den Kontakt b1 erreicht. Damit wird eine elektrische Verbindung der beiden Kontakte a1 und b1 durch den Lichtbogen verhindert, was andernfalls zum Netzkurzschluß mit der Möglichkeit der Entladung des Kondensators 6 in das Netz führen könnte. Eine dadurch bedingte Fehlbremsung wird folglich vermieden.

Insbesondere tritt bei einer üblichen 50 Hz-Wechselspannung als Versorgungsspannung spätestens nach 10 msec ein Nulldurchgang mit einer daraus resultierenden Löschung des Lichtbogens auf. In weiterer Ausbildung der Erfindung kann daher eine Verzögerungszeit des Schaltkontaktes des Umschalters S1 von mindestens 10 msec bis zur Anlage am Kontakt b1 gewählt werden.

Der während des Bremsbetriebes im Bremsstromkreis auftretende Bremsstrom kann ebenfalls sehr hoch werden. Je nach Motorleistung können dabei Gleichströme von 24 A und mehr auftreten, die erst im Verlaufe des Bremsbetriebes bis auf Null reduziert werden. Schaltet der Benutzer vom Motor- in den Bremsbetrieb und dann wieder in den Motorbetrieb zurück, so ist der hohe Bremsstrom häufig noch nicht gedämpft und es kann ein Lichtbogen zwischen den Kontakten a1, b1 oder a2, b2 an den Umschaltern S1 oder S2 entstehen. Solch ein Lichtbogen kann wiederum zu starkem Kontaktabbrand und damit zur baldigen Zerstörung der Umschalter führen. Besonders nachteilig ist dies, wenn direkt nach dem Umschalten vom Motor- in den Bremsbetrieb wieder zurückgeschaltet wird, da dann in der Regel noch keine wesentliche Reduzierung des Bremsstromes durch den Bremswiderstand erfolgt ist.

Zur Vermeidung dieser schädlichen Auswirkungen öffnen beim Umschalten vom Brems- in den Motorbetrieb die Schaltkontakte beider Umschalter S1, S2 im wesentlichen synchron, so daß sie im wesentlichen gleichzeitig von den Kontakten b1, b2 wegbewegt werden. Die beiden Schaltkontakte bewegen sich anschließend unverzögert und schalten danach im wesentlichen gleichzeitig den Motorkreis ein, d.h. sie kommen im wesentlichen gleichzeitig zur Anlage an die Kontakte a1 und a2.

Durch das synchrone Öffnen wird wiederum, wie bereits erläutert, falls Lichtbögen entstehen je ein Lichtbogen sowohl am Umschalter S1 als auch S2 erzeugt. Damit wird der Bremsstrom auf zwei Schaltstrecken verteilt, so daß keiner der beiden Umschalter S1, S2 übermäßig belastet wird. Eine Zerstörung durch Kontaktabbrand wird folglich vermieden. Es kommt nun jedoch noch hinzu, daß es sich beim Bremsstrom um einen Gleichstrom handelt, so daß keine Selbstlöschung des Lichtbogens aufgrund eines Phasen-Nulldurchgangs erfolgen könnte. Die Löschung der Lichtbögen erfolgt in diesem Fall dann, wenn der Schaltkontakt eine bestimmte Strecke von dem Kontakt b1 bzw. b2 entfernt ist. Daher werden beide Schaltkontakte nach dem Öffnen unverzögert bewegt, um eine möglichst große Distanz in kurzer Zeit zu überwinden und die Lichtbögen innerhalb kürzester Zeit zu löschen. Folglich wird auch in dem Extremfall, daß der Benutzer sofort nach dem Umschalten vom Motor- in den Bremsbetrieb wieder zurück in den Motorbetrieb schaltet, eine Zerstörung der Umschalter S1, S2 wirksam verhindert.

Die einzelnen Schaltkontakte der Umschalter S1 und S2 besitzen erfindungsgemäß ganz bestimmte Schaltreihenfolgen. Es ist deshalb vorteilhaft, lediglich ein gemeinsames Betätigungsorgan für beide Umschalter S1 und S2 vorzusehen, das vom Benutzer zum Umschalten vom Motor- in den Bremsbetrieb und umgekehrt betätigt wird. Das Betätigungsorgan wirkt dann auf eine Mechanik ein, die die beiden Umschalter S1 und S2 koppelt und deren Schaltkontakte entsprechend der beschriebenen Schaltreihenfolgen bewegt.

Der Widerstand 4 dient im Bremsbetrieb als Bremswiderstand. Beim Umschalten vom Brems- in den Motorbetrieb bleibt der im Bremsbetrieb bereits geöffnete Schalter S3 eine gewisse Zeit weiter offen. Dadurch wird der Widerstand 4 in der Anlaufphase, wie bereits beschrieben, als Vorwiderstand benutzt. Nach Beendigung dieser Anlaufphase wird der Schalter S3 geschlossen, so daß der Schalter S3 also mit einer durch die Dauer der Anlaufphase bestimmten Zeitverzögerung in Bezug auf die beiden Umschaltern S1 und S2 geschlossen wird. Umgekehrt wird beim Umschalten vom Motor- in den Bremsbetrieb der Schalter S3 im wesentlichen gleichzeitig mit den beiden Umschaltern S1 und S2 geöffnet, so daß der Widerstand 4 sofort als Bremswiderstand zur Verfügung steht. Aufgrund dieser Korrelation des Schalters S3 mit den beiden Umschaltern S1 und S2 kann es vorteilhaft sein, den Schalter S3 ebenfalls über eine diese Schaltreihenfolge realisierende Mechanik mit den Umschaltern S1 und S2 zu koppeln und mittels des gemeinsamen Betätigungsorgans zu betätigen.

Aus Kostengründen kann auf eine Bremselektronik verzichtet werden, insbesondere wenn es sich um Elektromotoren kleinerer Leistung handelt. Für geringere Ansprüche reicht es dann aus, einen ungeregelten Widerstand, der die Strombegrenzungsfunktion übernimmt, im Bremsstromkreis anzuordnen. Die erfindungsgemäße Bremsschaltung eignet sich auch hierfür.

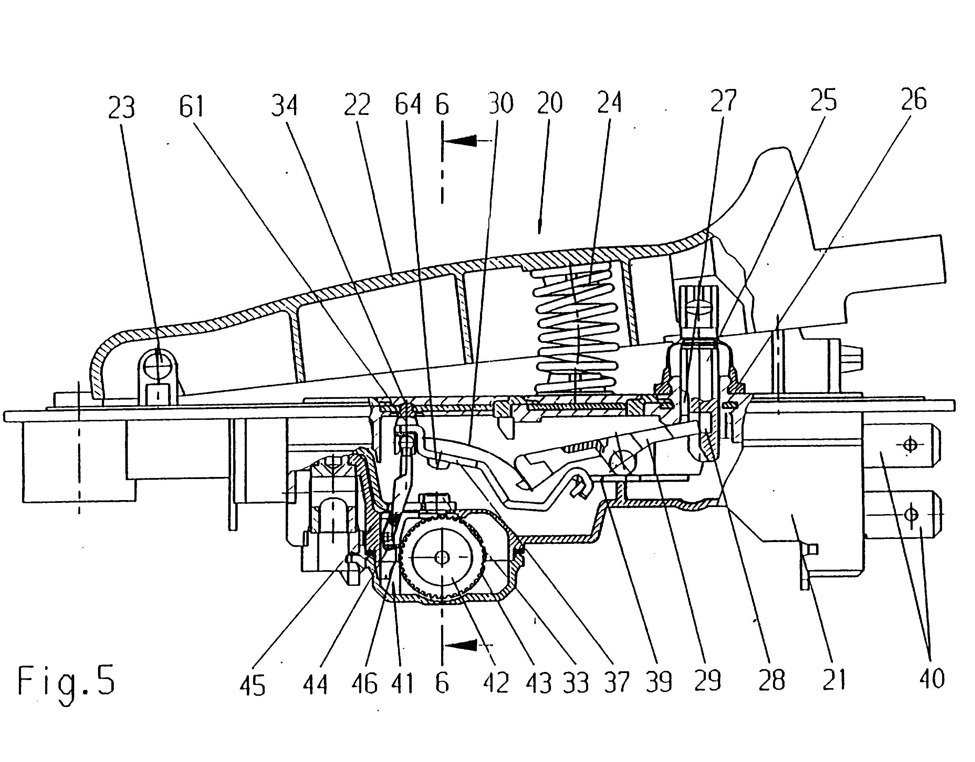

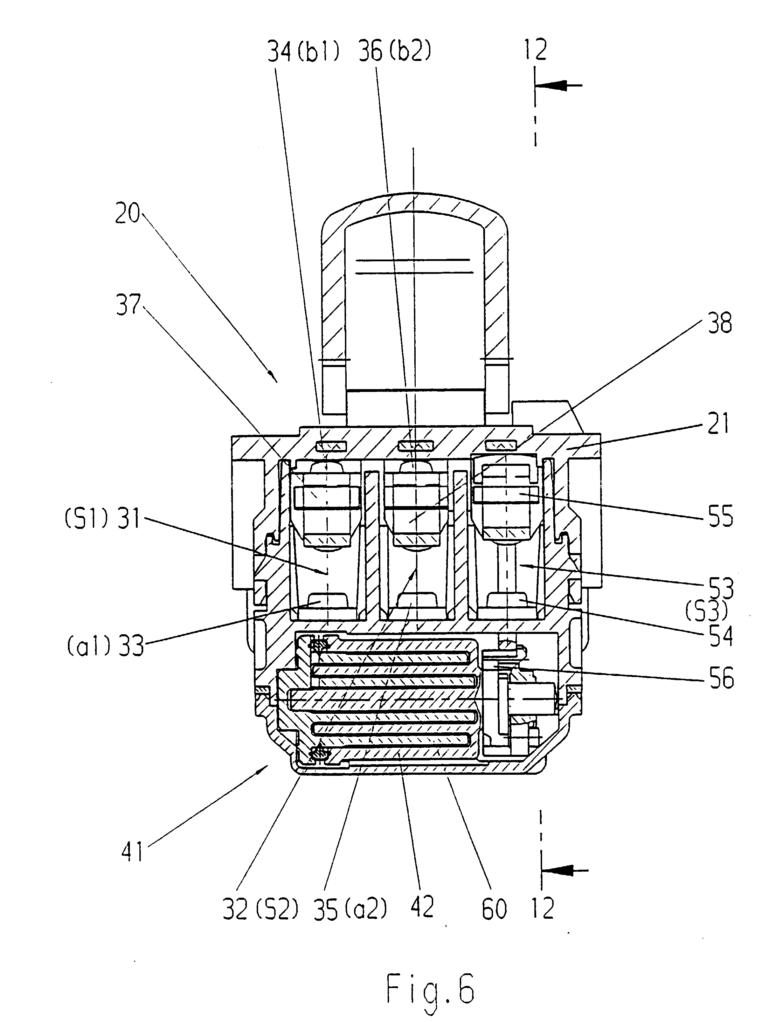

Ein zum Einsatz in eine erfindungsgemäße Bremsschaltung geeigneter elektrischer Schalter 20 ist in den Fig. 5 und 6 näher zu sehen. Dieser Schalter 20 besitzt ein Gehäuse 21, in dessen Inneren zwei als Umschalter ausgebildeten Kontaktsysteme 31, 32 mit den entsprechenden Steckkontakten 40 für die elektrischen Zuleitungen angeordnet sind. In vorliegendem Ausführungsbeispiel erfolgt die Verbindung der Steckkontakte 40 mit den Zuleitungen zum Elektromotor in der Weise, daß das Kontaktsystem 31 dem Umschalter S1 der Bremsschaltung und das Kontaktsystem 32 dem Umschalter S2 zugeordnet ist (man vergleiche auch Fig. 1). Die beiden Kontaktsysteme 31, 32 bestehen jeweils aus einem ersten Ruhekontakt 33, 35 und einem zweiten Ruhekontakt 34, 36 sowie einem zugehörigen Schaltkontakt 37, 38. Die Schaltkontakte 37, 38 sind über die zugehörigen Steckkontakte 40 mit jeweils einem Anschluß an die Feldwicklung 1 in der Bremsschaltung gemäß Fig. 1 verbunden. Weiter ist die elektrische Verschaltung im Schalter 20 so ausgeführt, daß der Ruhekontakt 33 dem Kontakt a1 des Umschalters S1 und der Ruhekontakt 34 dem Kontakt b1 entspricht. Beim Umschalter S2 wird der Kontakt a2 durch den Ruhekontakt 35 und der Kontakt b2 durch den Ruhekontakt 36 gebildet. Somit stellen die Schaltkontakte 37, 38 zusammen mit den Ruhekontakten 33, 35 die Verbindung zum Motorkreis und zusammen mit den Ruhekontakten 34, 36 die Verbindung zum Bremsstromkreis dar.

Zum Umschalten der beiden Schaltkontakte 37 bzw. 38 zwischen den beiden Ruhekontakten 33, 34 bzw. 35, 36 befindet sich am Gehäuse 21 ein Betätigungsorgan 22, das mittels eines Zapfens 23 gegen die Kraft einer Rückstellfeder 24 drehbar gelagert ist. Ein am Betätigungsorgan 22 angelenkter Stößel 25 reicht durch eine mittels eines elastischen Balges 26 abgedichtete Öffnung 27 ins Innere des Gehäuses 21. Der Stößel 25 besitzt im Innern des Gehäuses 21 eine Aussparung 28, in die ein erster Hebelarm einer im innern des Gehäuses 21 drehbar gelagerten Wippe 29 eingreift. Am zweiten Hebelarm der Wippe 29 ist als Federelement für jeden Schaltkontakt 37, 38 eine unter Vorspannung stehende Blattfeder 30 mit einem Ende eingespannt, deren anderes Ende am Schaltkontakt 37, 38 in der Nähe der Kontaktfläche 61 befestigt ist. An der der Kontaktfläche 61 gegenüberliegenden Seite ist der Schaltkontakt 37, 38 in einem im Innern des Gehäuses 21 befindlichen Schneidenlager 39 gelagert.

Im unbetätigten Zustand des Betätigungsorgans 22 liegt die Kontaktfläche 61 des Schaltkontakts 37, 38 an den Ruhekontakten 34, 36 an, womit die Verbindungen zum Bremsstromkreis hergestellt und die Verbindung des Elektromotors mit der Versorgungsspannung abgeschaltet ist. Wird das Betätigungsorgan 22 vom Benutzer betätigt, so wird die Wippe 29 über den Stößel 25 verschwenkt. Dabei werden die Blattfedern 30 der beiden Schaltkontakte 37, 38 verformt. Aufgrund der symmetrischen Anordnung beider Blattfedern 30 an einer gemeinsamen Wippe 29 erfolgt bei einer bestimmten Verformung ein im wesentlichen synchrones Abheben der Kontaktflächen 61 beider Schaltkontakte 37, 38 von den Ruhekontakten 34, 36, wobei das Abheben durch die Federkraft schlagartig erfolgt. Umgekehrt erfolgt das Abheben der weiteren Kontaktflächen 64 der Schaltkontakte 37, 38 von den Ruhekontakten 33, 35 ebenfalls im wesentlichen synchron und schlagartig, wenn das Betätigungsorgan 22 losgelassen wird und wiederum in seinen unbetätigten Zustand zurückkehrt.

Erfindungsgemäß ist nun das dem Umschalter S1 zugeordnete Kontaktsystem 31 mit einer Verzögerungseinrichtung 41 versehen, mit deren Hilfe die Bewegung des Schaltkontakts 37 nach dem Abheben der Kontaktfläche 64 vom ersten Ruhekontakt 33 beim Umschalten vom Motor- in den Bremsbetrieb verzögert wird, so daß die Kontaktfläche 61 am Schaltkontakt 37 später zur Anlage am zweiten Ruhekontakt 34 kommt als die Anlage der entsprechenden Kontaktfläche 61 des Schaltkontakts 38 des weiteren Kontaktsystems 32 am zweiten Ruhekontakt 36. Diese Verzögerungseinrichtung 41 wird bei der umgekehrten Schaltrichtung, nämlich beim Umschalten vom Brems- in den Motorbetrieb, nicht oder allenfalls unwesentlich wirksam, so daß der Schaltkontakt 37 beim Umschalten vom zweiten Ruhekontakt 34 auf den ersten Ruhekontakt 33 keine wesentliche Verzögerung erfährt. Der Schaltkontakt 38 des anderen Kontaktsystems 32, das dem Umschalter S2 zugeordnet ist, bewegt sich in beiden Umschaltrichtungen, d.h. sowohl vom ersten Ruhekontakt 35 zum zweiten Ruhekontakt 36 als auch umgekehrt unverzögert und zwar aufgrund der Federkraft der Blattfeder 30 mit einer Schnappwirkung.

Die nähere Ausbildung der Verzögerungseinrichtung 41 ist ebenfalls aus Fig. 5 und 6 zu ersehen. Sie besteht aus einem mit dem Schaltkontakt 37 in Verbindung stehenden Mittel, das ein formschlüssiges Eingreifen in ein bewegungshemmendes Element beim Umschalten vom ersten Ruhekontakt 33 auf den zweiten Ruhekontakt 34 gestattet.

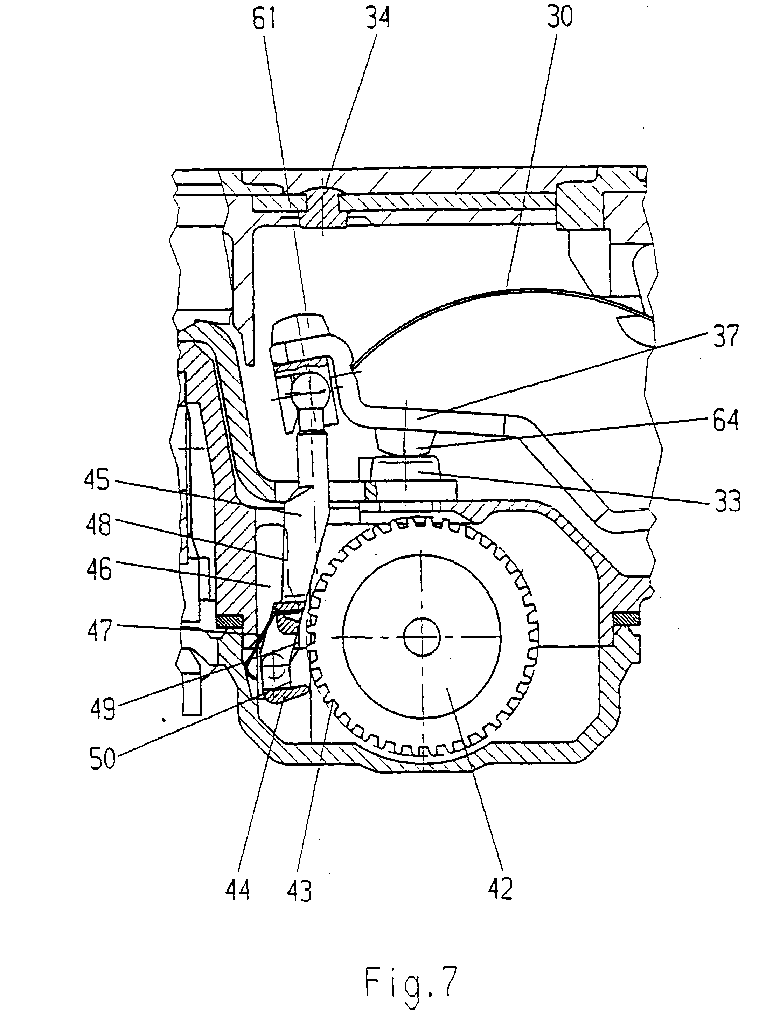

Bei diesem Mittel handelt es sich um einen Schalthebel 45, der mit einer Seite am Schaltkontakt 37 angelenkt ist. An seiner anderen Seite besitzt der Schalthebel 45 ein Rastelement 44. Das bewegungshemmende Element besteht vorliegend aus einer drehbar im Gehäuse 21 gelagerten zylindrischen Trommel 42, in der, wie insbesondere in Fig. 6 zu sehen ist, eine weitere innere Trommel 60 angeordnet ist. Die Trommel 42 kann sich gegenüber der inneren Trommel 60 bewegen. Im Innern der Trommel 42 befindet sich zwischen der Trommel 42 und der inneren Trommel 60 eine viskose Flüssigkeit, beispielsweise ein Silikonöl mit passend gewählter Viskosität. Dadurch wird die Drehbewegung der Trommel 42 mittels der viskosen Flüssigkeit gedämpft. Auf der Mantelfläche dieser Trommel 42 ist an der dem Kontaktsystem 31 zugewandten Seite eine Verzahnung 43 (siehe Fig. 5) angeordnet, in die das am Schalthebel 45 befindliche Rastelement 44 eingreifen kann. Dieses Eingreifen des Rastelementes 44 in die Verzahnung 43 wird von einer im Gehäuse 21 angeordneten Kulisse 46, an der der Schalthebel 45 beim Umschalten des Schaltkontakts 37 zwischen den beiden Ruhekontakten 33, 34 entlanggeführt wird, bewirkt. Dazu beaufschlagt ein in Fig. 7 näher zu sehendes Federelement 47 am Schalthebel 45 diesen mit einer auf die Führung der Kulisse 46 gerichteten Kraft.

Die Wirkungsweise der Verzögerungseinrichtung 41 beim Umschalten vom ersten Ruhekontakt 33 auf den zweiten Ruhekontakt 34 ist näher in den Fig. 7 bis 9 zu sehen.

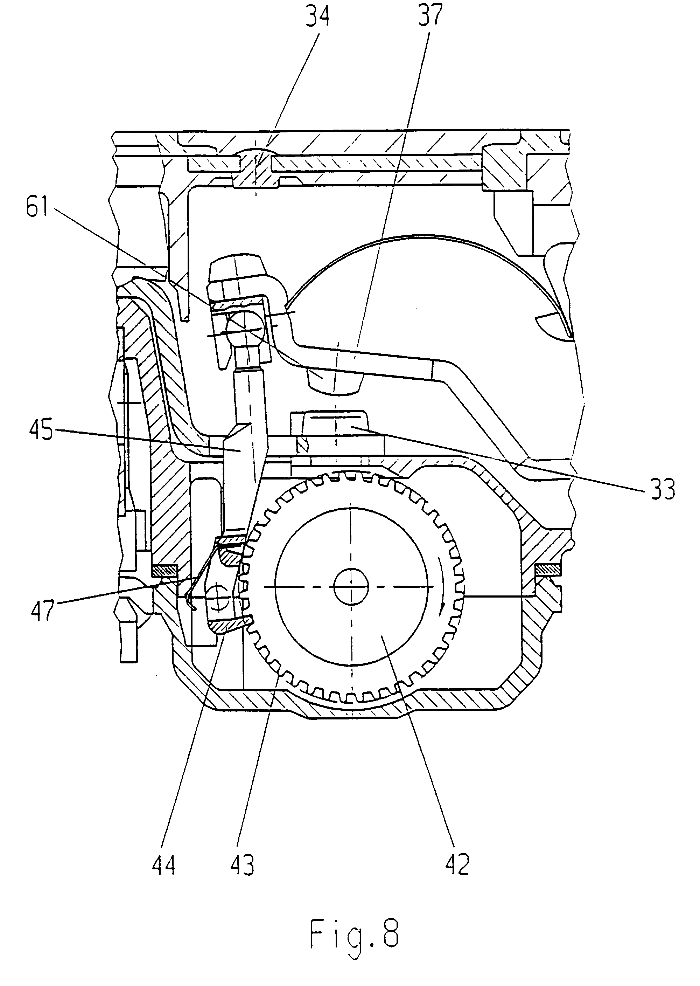

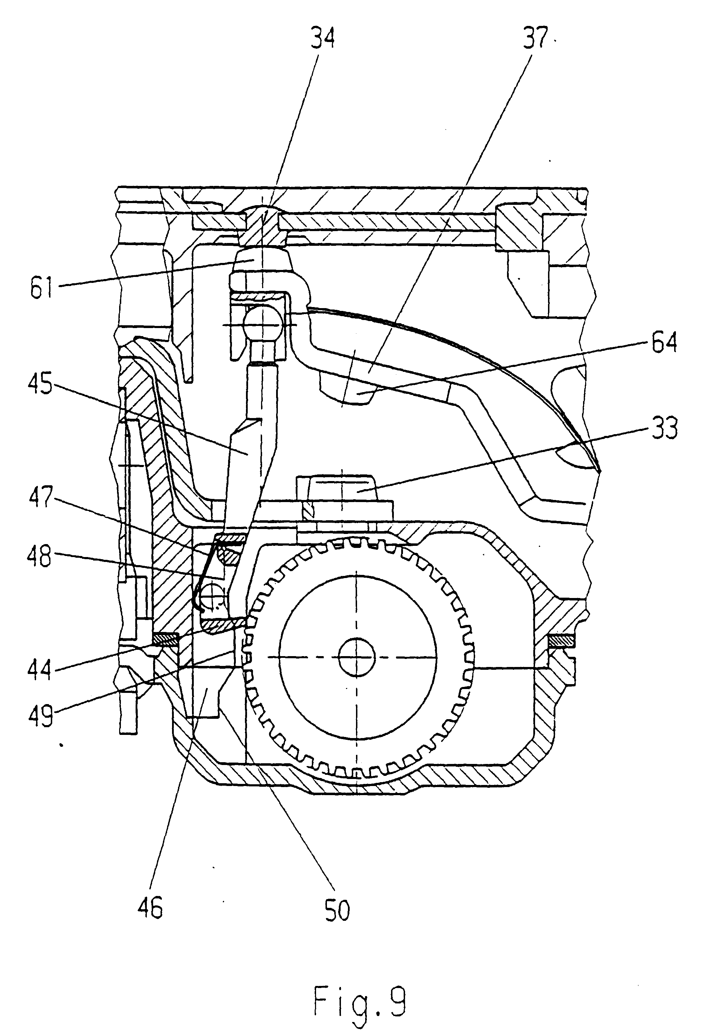

In Fig. 7 ist die Kontaktfläche 64 des Schaltkontakts 37 noch in Anlage am ersten Ruhekontakt 33 und damit der Motorbetrieb des Elektromotors eingeschaltet. Der Schalthebel 45 liegt an der unteren zurückgezogenen Fläche 50 der Kulisse 46 an, so daß das Rastelement 44 nicht in Eingriff mit der Verzahnung 43 steht. Wird nun das Betätigungsorgan 22 (siehe Fig. 5) vom Benutzer losgelassen, um den Elektromotor auszuschalten und damit vom Motor- in den Bremsbetrieb umzuschalten, so hebt der Schaltkontakt 37 vom Ruhekontakt 33 aufgrund der Federkraft der Blattfeder 30 unverzögert ab, wobei der Motorkreis geöffnet wird. Dabei wird gleichzeitig der an den Schaltkontakt 37 angelenkte Schalthebel 45 mitbewegt. Bei dieser Bewegung wird der Schalthebel 45 aufgrund der Kraft des Federelementes 47 entlang der Kulisse 46 geführt und kommt von der unteren zurückgezogenen Fläche 50 zur mittleren vorgezogenen Fläche 49. Dort kommt auch das Rastelement 44 in Eingriff mit der Verzahnung 43 an der Trommel 42, wie in Fig. 8 zu sehen ist. Aufgrund der Dämpfung der Trommel 42 wird die weitere Bewegung des Schalthebels 45 gehemmt und damit auch Umschaltbewegung des Schaltkontakts 37 verzögert, solange der Schalthebel 45 an der mittleren vorgezogenen Fläche 49 der Kulisse 46 entlanggleitet. Beim Übergang von der mittleren vorgezogenen Fläche 49 auf die obere zurückgezogene Fläche 48 der Kulisse 46 gelangt das Rastelement 44 wieder außer Eingriff von der Verzahnung 43, wie in Fig. 9 zu sehen ist. In dieser Stellung kommt die Kontaktfläche 61 am Schaltkontakt 37 in Anlage an den zweiten Ruhekontakt 34, womit der Bremsstromkreis und damit der Bremsbetrieb des Elektromotors eingeschaltet ist.

Die Kulisse 46 wird durch entsprechende Dimensionierung der unteren zurückgezogenen Fläche 50 vorzugsweise so ausgebildet, daß die Kontaktfläche 64 des Schaltkontakts 37 unverzögert eine Strecke von ca. 5/10 mm vom ersten Ruhekontakt 33 abhebt. Weiter werden die Trommel 42 und die mittlere vorgezogene Fläche 49 so dimensioniert, daß die Kontaktfläche 61 des Schaltkontakts 37 mit einer Verzögerungszeit von mindestens 10 msec am Ruhekontakt 34 zur Anlage kommt. Die gewünschte Verzögerungszeit kann auch weiter noch durch entsprechende Wahl der Viskosität der in der Trommel 42 enthaltenen Flüssigkeit eingestellt werden.

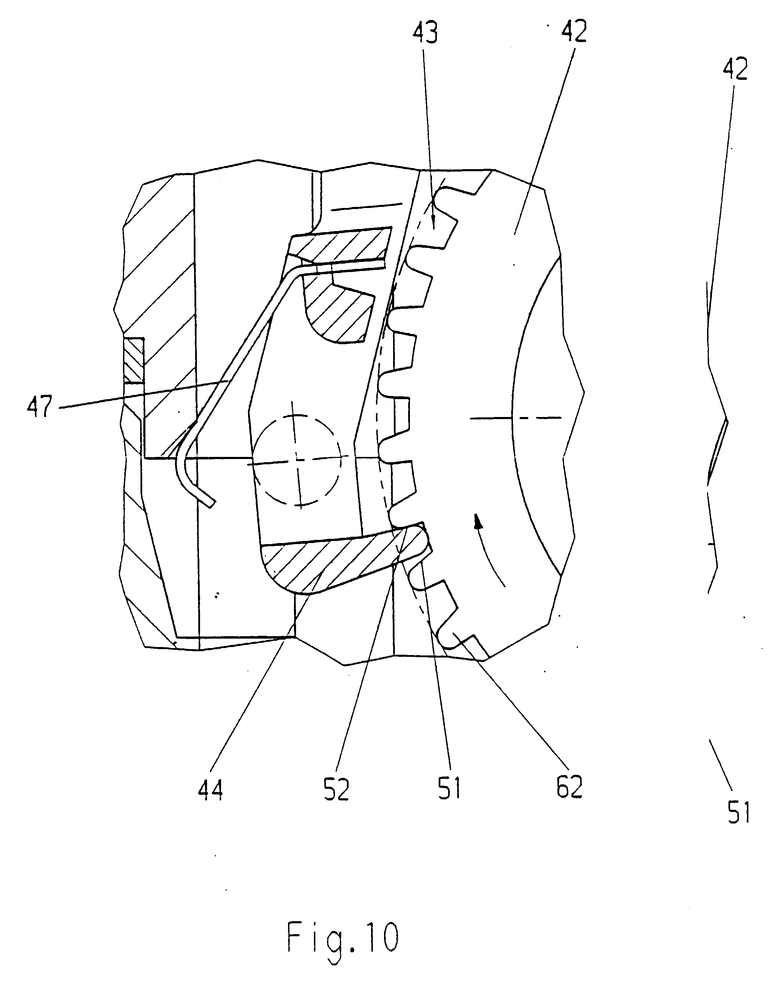

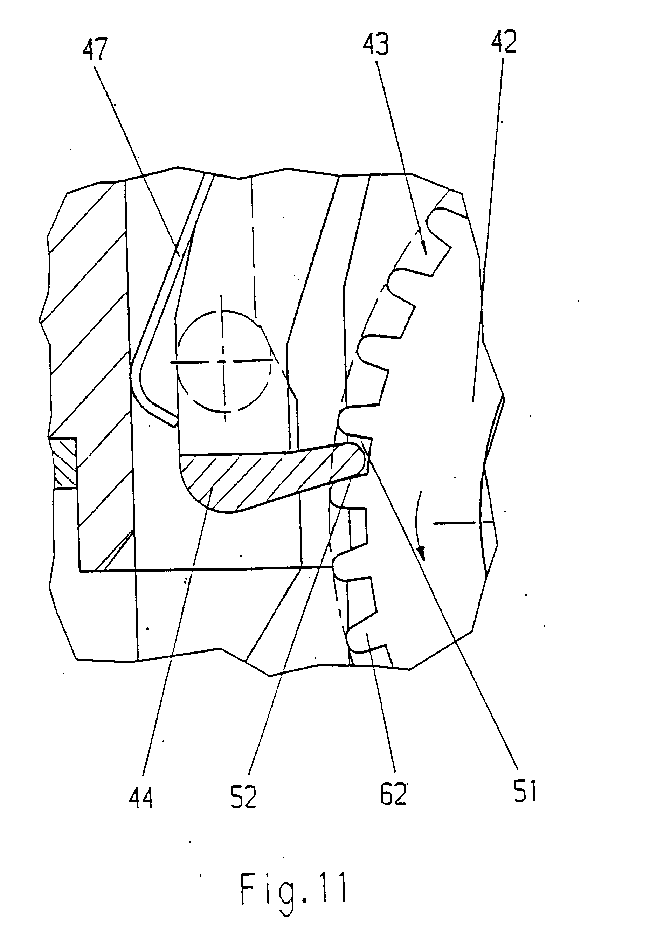

Beim Umschalten des Schaltkontaktes 37 vom zweiten Ruhekontakt 34 auf den ersten Ruhekontakt 33, d.h. beim Einschalten des Elektromotors bzw. beim Umschalten vom Brems- in den Motorbetrieb, erfolgt kein oder höchstens ein unwesentliches Eingreifen des Rastelementes 44 in die Verzahnung 43 der Trommel 42, so daß keine wesentliche Verzögerung des Schaltkontakts 37 auftritt. Das wird erreicht, indem die Verzahnung 43 an der Trommel 42 derart ausgebildet wird, daß durch das Zusammenwirken von Verzahnung 43 und Rastelement 44 eine in Richtung aus der Verzahnung 43 weisende Kraftkomponente auf das Rastelement 44 bei der Bewegung des Schaltkontakts 37 mit angelenktem Schalthebel 45 hin zum ersten Ruhekontakt 33 einwirkt. Dazu besitzen die Zähne 62 der Verzahnung 43 zwei unterschiedlich gestaltete Flanken, nämlich eine schräge Flanke 51 und eine steile Flanke 52, wie in Fig. 10 oder 11 besonders deutlich zu sehen ist.

Bei der Bewegung des Schalthebels 45 entlang der oberen zurückgezogenen Fläche 48 der Kulisse 46 wird das Rastelement 44 aufgrund der Kraft des Federelementes 47 bei Erreichen der mittleren vorgezogenen Fläche 49 der Kulisse 46 zunächst wieder in die Verzahnung 43 bewegt und dabei die Trommel 42 in eine Drehbewegung im Gegenuhrzeigersinn versetzt. Da die Umschaltbewegung vom zweiten Ruhekontakt 34 auf den ersten Ruhekontakt 33 verläuft, wirkt nunmehr die schräge Flanke 51 mit dem Rastelement 44 zusammen, wie in Fig. 11 gezeigt ist, wobei aufgrund des Winkels zwischen dem Rastelement 44 und der schrägen Flanke 51 eine aus der Verzahnung 43 herausweisende Kraftkomponente entsteht. Aufgrund dieser Kraftkomponente entfernt sich der Schalthebel 45 gegen die Kraft des Federelementes 47 von der mittleren vorgezogenen Fläche 49 der Kulisse 46 und das Rastelement 44 gelangt außer Eingriff von der Verzahnung 43. Der Schalthebel 45 bewegt sich dadurch im wesentlichen unverzögert mitsamt dem Schaltkontakt 37 auf den ersten Ruhekontakt 33 zu, wobei ein erneutes Eingreifen des Rastelementes 44 in die Verzahnung 43 aufgrund der Drehbewegung der Trommel 42 während dieser Bewegung nicht mehr eintritt.

Dieser Effekt kann noch verstärkt werden, indem die Vorspannung der Blattfeder 30 so gewählt wird, daß beim Umschalten vom zweiten Ruhekontakt 34 auf den ersten Ruhekontakt 33 eine größere Federkraft als in der umgekehrten Bewegungsrichtung wirksam ist. Dadurch wird ein Eingriff des Rastelementes 44 in die Verzahnung 43 beim Umschalten vom Brems- in den Motorbetrieb aufgrund der größeren Bewegungsgeschwindigkeit des Schaltkontakts 37 mit angelenktem Schalthebel 45 zusätzlich verhindert. Als besonders geeignet hat sich eine Federkraft erwiesen, die in der Umschaltrichtung vom Brems- in den Motorbetrieb ca. 5 mal größer als in der umgekehrten Richtung ist.

Umgekehrt ist beim Umschalten vom Motor- in den Bremsbetrieb ein Eingreifen des Rastelementes 44 in die Verzahnung 43 und damit die bereits beschriebene Verzögerung jedoch gewährleistet. Wie aus Fig. 10 zu ersehen ist, wird die Trommel 42 durch den Schalthebel 45 in Uhrzeigerrichtung bewegt, wobei die steile Flanke 52 im wesentlichen parallel am Rastelement 44 anliegt. Eine aus der Verzahnung 43 herausweisende Kraftkomponente tritt somit nicht auf, vielmehr wirkt die von dem Rastelement 44 auf die Verzahnung 43 ausgeübte Kraft im wesentlich parallel zur Bewegungsrichtung des Schalthebels 45, so daß das Federelement 47 begünstigend auf den Eingriff des Rastelementes 44 in die Verzahnung 43 wirkt. Allerdings wirkt dieser vom Rastelement 44 auf die Verzahnung 43 ausgeübten Kraft in Bewegungsrichtung des Schalthebels 45 eine durch die Bewegungshemmung der Trommel 42 erzeugte Kraft entgegen, so daß die Bewegung des Schalthebels 45 verzögert wird.

Wie anhand der Fig. 1 bereits erläutert, kann in der Bremsschaltung noch ein weiterer Schalter S3 zur Überbrückung eines als Vor- und Bremswiderstandes wirkenden Widerstandes 4 angeordnet sein. Es kann nun vorteilhaft sein, diesen Schalter S3 ebenfalls in den elektrischen Schalter 20 zu integrieren.

Der als Schließer ausgebildete Schalter S3 ist als weiteres Kontaktsystem 53 im Gehäuse 21 des elektrischen Schalters 20 angeordnet, wie insbesondere der Fig. 6 entnommen werden kann. Das Kontaktsystem 53 besitzt lediglich einen Ruhekontakt 54 und einen Schaltkontakt 55. Im Bremsbetrieb ist der Schaltkontakt 55 vom Ruhekontakt 54 abgehoben und das Kontaktsystem 53 somit geöffnet. Wird über das Betätigungsorgan 22 vom Brems- in den Motorbetrieb umgeschaltet und der Elektromotor damit eingeschaltet, so wird mittels einer Verzögerungseinrichtung die Bewegung des Schaltkontaktes 55 gehemmt. Während die beiden den Motorkreis einschaltenden Schaltkontakte 37 bzw. 38 unverzögert vom zweiten Ruhekontakt 34 bzw. 36 auf den ersten Ruhekontakt 33 bzw. 35 schalten, kommt der Schaltkontakt 55 erst nach einer geeignet gewählten Verzögerungszeit, innerhalb der die Anlaufphase für den Elektromotor beendet ist, in Anlage an den Ruhekontakt 54, womit der Widerstand 4 überbrückt wird (siehe Fig. 1). Umgekehrt wird beim Umschalten vom Motor- in den Bremsbetrieb der Schaltkontakt 55 unverzögert vom Ruhekontakt 54 abgehoben und somit das Kontaktsystem 53 unverzögert geöffnet.

Als Verzögerungseinrichtung für das weitere Kontaktsystem 53 kann auf vorteilhafter Weise das bereits für das Kontaktsystem 31 vorhandene bewegungshemmende Element mitverwendet werden. Dazu besitzt die Trommel 42 im Bereich des Kontaktsystems 53 ebenfalls eine Verzahnung 56, in die am Schaltkontakt 55 angeordnete Mittel bei Bewegung des Schaltkontakts 55 in Richtung auf den Ruhekontakt 54 formschlüssig eingreifen, wie weiter anhand der Fig. 11 gezeigt ist. Diese Mittel bestehen aus einem am Schaltkontakt 55 angelenkten Hebel 57, der wiederum gelenkig mit einem Rastzähne 59 besitzenden Rasthebel 58 verbunden ist. Der Rasthebel 58 ist weiter gelenkig an einem drehbar an der Achse der Trommel 42 gelagerten Verbindungshebel 63 angeordnet. Beim Umschalten vom Brems- in den Motorbetrieb werden die Rastzähne 59 des Rasthebels 58 über den Hebel 57 aufgrund der Bewegung des Schaltkontakts 55 in Eingriff mit der Verzahnung 56 gebracht, womit die Bewegung des Schaltkontakts 55 nach dem bereits beschriebenen Prinzip verzögert wird. Beim Umschalten vom Motor- in den Bremsbetrieb wird der Rasthebel 58 über den Hebel 57 schlagartig von der Trommel 42 abgehoben, so daß die Rastzähne 59 am Rasthebel 58 sofort außer Eingriff von der Verzahnung 56 kommen, wobei folglich auch keine Verzögerung beim Öffnen des Kontaktsystems 53 auftritt.

Im vorliegenden Ausführungsbeispiel ist eine aus einer mittels einer Flüssigkeit gedämpften Trommel 42 und einem Schalthebel 45 bestehende Verzögerungseinrichtung 41 beschrieben. Es liegt im Rahmen der Erfindung auch auf anderen Wirkprinzipien beruhende Verzögerungseinrichtungen an einem für die Bremsschaltung geeigneten elektrischen Schalter zu verwenden. Beispielsweise kann die Verzögerungseinrichtung auch mittels einer Kolben-Zylinder-Anordnung arbeiten, wobei eine Dämpfung pneumatisch mittels eines Gasdrucks erzielt wird.

### Bezugszeichen-Liste:

- 1:: Feldwicklung
- 2, 3:: Anschluß (der Versorgungsspannung)
- 4:: Widerstand
- 5:: Ankerwicklung
- 6:: Kondensator
- 7:: Diode (an Kondensator)
- 8:: Bremselektronik
- 9:: Diode
- 10:: Diode
- 20:: elektrischer Schalter
- 21:: Gehäuse
- 22:: Betätigungsorgan
- 23:: Zapfen
- 24:: Rücksteilfeder
- 25:: Stößel
- 26:: elastischer Balg
- 27:: Öffnung (für Stößel)
- 28:: Aussparung
- 29:: Wippe
- 30:: Blattfeder
- 31, 32:: Kontaktsystem
- 33, 35:: erster Ruhekontakt
- 34, 36:: zweiter Ruhekontakt
- 37, 38:: Schaltkontakt
- 39:: Schneidenlager
- 40:: Steckkontakt
- 41:: Verzögerungseinrichtung
- 42:: Trommel
- 43:: Verzahnung
- 44:: Rastelement
- 45:: Schalthebel
- 46:: Kulisse
- 47:: Federelement
- 48:: obere zurückgezogene Fläche
- 49:: mittlere vorgezogene Fläche
- 50:: untere zurückgezogene Fläche
- 51:: schräge Flanke
- 52:: steile Flanke
- 53:: weiteres Kontaktsystem (Schließer)
- 54:: Ruhekontakt
- 55:: Schaltkontakt
- 56:: Verzahnung (für weiteres Kontaktsystem)
- 57:: Hebel
- 58:: Rasthebel
- 59:: Rastzahn
- 60:: innere Trommel
- 61:: Kontaktfläche (am Schaltkontakt)
- 62:: Zahn (der Verzahnung)
- 63:: Verbindungshebel
- 64:: weitere Kontaktfläche (am Schaltkontakt)

## Patentansprüche

1. Bremsschalter, der aus wenigstens zwei Umschaltern (S1, S2) besteht, für einen Elektromotor, insbesondere zum Antrieb von Elektrohandwerkzeugen, wie Bohrmaschinen, Winkelschleifer, Heckenscheren u. dgl., wobei im Motorbetrieb wenigstens eine Feldwicklung des Elektromotors über die beiden Umschalter (S1, S2) in Reihe mit der Ankerwicklung an der Versorgungsspannung liegt, so daß ein Motorkreis gebildet ist, im Bremsbetrieb die Feldwicklung mit der Ankerwicklung über die beiden Umschalter (S1, S2) einen geschlossenen Bremsstromkreis bildet, indem ein Umschalter (S1) mittels eines Schaltkontakts mit dem netznahen Anschluß der Feldwicklung verbunden ist und zwischen einem an den Netzpol geschalteten Kontakt (a1) und einem mit einem ersten Anschluß an den Bremsstromkreis verbundenen Kontakt (b1) schaltet sowie der zweite Umschalter (S2) mittels eines Schaltkontakts mit dem netzfernen Anschluß der Feldwicklung verbunden ist und zwischen einem mit dem Anschluß zur Ankerwicklung verbundenen Kontakt (a2) und einem mit einem zweiten Anschluß an den Bremsstromkreis verbundenen Kontakt (b2) schaltet und wobei beim Umschalten vom Motor- in den Bremsbetrieb ein Zeitversatz der Schaltvorgänge der beiden Umschalter (S1, S2) vorliegt, dadurch gekennzeichnet, daß beim Umschalten vom Motor- in den Bremsbetrieb der Schaltkontakt des netznahen Umschalters (S1) gegenüber dem Schaltkontakt des netzfernen Umschalters (S2) sich verzögert bewegt und den Bremsstromkreis am netznahen Umschalter (S1) später einschaltet und beim Umschalten vom Brems- in den Motorbetrieb beide Umschalter (S1, S2) im wesentlichen synchron öffnen, deren Schaltkontakte sich unverzögert bewegen und im wesentlichen gleichzeitig den Motorkreis einschalten.

2. Bremsschalter nach Anspruch 1, dadurch gekennzeichnet, daß beim Umschalten vom Motor- in den Bremsbetrieb die beiden Umschalter (S1, S2) den Motorkreis im wesentlichen synchron öffnen, wobei der Schaltkontakt des Umschalters (S1) vorzugsweise sich mindestens 5/10 mm unverzögert öffnet und sich erst danach verzögert bewegt.

3. Bremsschalter nach Anspruch 1 oder 2, dadurch gekennzeichnet, daß der Schaltkontakt des Umschalters (S2) beim Umschalten vom Motor- in den Bremsbetrieb sich unverzögert bewegt.

4. Bremsschalter nach Anspruch 1, 2 oder 3, dadurch gekennzeichnet, daß es sich bei der Versorgungsspannung für den Elektromotor um eine Wechselspannung handelt und der Schaltkontakt des Umschalters (S1) beim Umschalten vom Motorin den Bremsbetrieb sich so verzögert bewegt, daß ein am Umschalter (S1) entstehender Lichtbogen aufgrund des Nulldurchgang der Phase der Versorgungsspannung gelöscht ist, bevor der Schaltkontakt den Kontakt (b1) erreicht.

5. Bremsschalter nach Anspruch 4, dadurch gekennzeichnet, daß der Schaltkontakt des Umschalters (S1) beim Umschalten vom Motor- in den Bremsbetrieb mindestens 10 msec bis zur Anlage am Kontakt (b1) verzögert ist.

6. Bremsschalter nach einem der Ansprüche 1 bis 5, dadurch gekennzeichnet, daß ein gemeinsames Betätigungsorgan für die beiden Umschalter (S1, S2) auf eine Mechanik einwirkt, die die beiden Umschalter (S1, S2) miteinander koppelt und deren Schaltkontakte in der Schaltreihenfolge bewegt.

7. Bremsschalter nach einem der Ansprüche 1 bis 6, dadurch gekennzeichnet, daß ein Widerstand (4) im Motorkreis zwischen dem netzfernen Umschalter (S2) und der Ankerwicklung (5) geschaltet ist, wobei dieser Widerstand (4) über zwei als Freilaufdioden wirkende Dioden (10,7) an den Bremsstromkreis angeschaltet ist, so daß der Widerstand (4) als Vorwiderstand beim Motorbetrieb und als Bremswiderstand beim Bremsbetrieb dient.

8. Bremsschalter nach Anspruch 7, dadurch gekennzeichnet, daß die Diode (10) mit ihrer Anode am Kontakt (b2) des netzfernen Umschalters (S2) und die weitere Diode (7) mit ihrer Anode am Widerstand (4) angeschaltet sind.

9. Bremsschalter nach Anspruch 7 oder 8, dadurch gekennzeichnet, daß parallel zum Widerstand (4) ein weiterer Schalter (S3) angeordnet ist, der im geschlossenen Zustand den Widerstand (4) überbrückt.

10. Bremsschalter nach Anspruch 9, dadurch gekennzeichnet, daß beim Umschalten vom Motor- in den Bremsbetrieb der Schaltkontakt des Schalters (S3) unverzögert und im wesentlichen gleichzeitig mit den Umschaltern (S1, S2) öffnet und beim Umschalten vom Brems- in den Motorbetrieb der Schaltkontakt des Schalters (S3) verzögert gegenüber den Umschaltern (S1, S2) schließt.

11. Bremsschalter nach Anspruch 10, dadurch gekennzeichnet, daß der weitere Schalter (S3) über eine die Schaltreihenfolge realisierende Mechanik mit den beiden Umschaltern (S1, S2) gekoppelt ist und auf die Mechanik ein gemeinsames Betätigungsorgan für die Umschalter (S1, S2) und den Schalter (S3) einwirkt.

12. Bremsschalter nach einem der Ansprüche 1 bis 11, dadurch gekennzeichnet, daß eine Bremselektronik (8) im Bremsstromkreis zur Steuerung oder Regelung des Bremsstromes angeordnet ist.

13. Bremsschalter nach Anspruch 12, dadurch gekennzeichnet, daß eine weitere Diode (9) im Bremsstromkreis zwischen der Bremselektronik (8) und der Ankerwicklung (5) angeordnet ist, wobei deren Anode an der Bremselektronik (8) angeschlossen ist.

14. Bremsschalter nach einem der Ansprüche 1 bis 13, dadurch gekennzeichnet, daß ein als Startkondensator für den Bremsbetrieb dienender Kondensator (6) parallel zur Ankerwicklung (5) geschaltet ist.

15. Bremsschalter nach Anspruch 14, dadurch gekennzeichnet, daß der Kondensator (6) zwischen der Anode der Diode (9) und der Kathode der Diode (7) geschaltet ist.

16. Bremsschalter nach einem der vorhergehenden Ansprüche mit wenigstens zwei als Umschalter ausgebildeten Kontaktsystemen (S1, S2), wobei die beiden Kontaktsysteme (S1, S2) jeweils aus einem ersten Ruhekontakt (a1, a2) und einem zweiten Ruhekontakt (b1, b2) sowie einem Schaltkontakt (37, 38) bestehen und die Schaltkontakte (37, 38) von einer Wippe (29), die wiederum von einem Stößel (25) betätigbar ist, mittels eines Federelementes (30) zwischen den beiden Ruhekontakten (a1, b1 bzw. a2, b2) umschaltbar sind, wobei die Kontakte (b1, b2) der nichtbetätigten Stellung des Kontaktsystems (S1, S2) zugeordnet sind, wobei die Federelemente (30) derart an der Wippe (29) und an den Schaltkontakten (37, 38) angeordnet sind, daß wenigstens beim Umschalten von den Ruhekontakten (b1, b2; 34, 36) auf die Ruhekontakte (a1, a2; 33, 35) ein im wesentlichen synchrones Abheben der Kontaktflächen (61, 64) der Schaltkontakte (37, 38) von den Ruhekontakten (a1, b1, a2, b2; 33, 34, 35, 36) erfolgt, wobei das Kontaktsystem (S1; 31) mit einer Verzögerungseinrichtung (41) in Verbindung steht, mit deren Hilfe die Bewegung des zugehörigen Schaltkontakts (37) beim Umschalten vom ersten Ruhekontakt (a1; 33) auf den zweiten Ruhekontakt (b1; 34) nach erfolgtem Abheben der Kontaktfläche (64) vom ersten Ruhekontakt (a1; 33) verzögert wird, wobei die Kontaktfläche (61) an diesem Schaltkontakt (37) später zur Anlage am zweiten Ruhekontakt (b1; 34) kommt als der Schaltkontakt (38) des anderen Kontaktsystems (S2; 32) und wobei die Verzögerungseinrichtung (41) beim Umschalten vom zweiten Ruhekontakt (b1; 34) auf den ersten Ruhekontakt (a1; 33) keine wesentliche Verzögerung am zugeordneten Schaltkontakt (37) bewirkt.

17. Bremsschalter nach Anspruch 16, dadurch gekennzeichnet, daß die Verzögerungseinrichtung (41) aus einem mit dem Schaltkontakt (37) in Verbindung stehenden Mittel und einem bewegungshemmenden Element besteht, wobei das Mittel ein formschlüssiges Eingreifen in das bewegungshemmende Element beim Umschalten vom ersten Ruhekontakt (33) auf zweiten Ruhekontakt (34) gestattet.

18. Bremsschalter nach Anspruch 17, dadurch gekennzeichnet, daß das mit dem Schaltkontakt (37) in Verbindung stehende Mittel als Schalthebel (45) ausgebildet ist, der mit einer Seite am Schaltkontakt (37) angelenkt ist und an seiner anderen Seite ein Rastelement (44) besitzt.

19. Bremsschalter nach Anspruch 17 oder 18, dadurch gekennzeichnet, daß das bewegungshemmende Element aus einer drehbar gelagerten Trommel (42) besteht, in der eine weitere innere Trommel (60) angeordnet ist, wobei sich zwischen der Trommel (42) und der inneren Trommel (60) eine viskose Flüssigkeit befindet.

20. Bremsschalter nach Anspruch 19, dadurch gekennzeichnet, daß es sich bei der viskosen Flüssigkeit um Silikonöl handelt.

21. Bremsschalter nach Anspruch 19 oder 20, dadurch gekennzeichnet, daß auf der Mantelfläche der Trommel (42) an der dem Kontaktsystem (31) zugewandten Seite eine Verzahnung (43) angeordnet ist, in die das Rastelement (44) am Schalthebel (45) eingreifen kann.

22. Bremsschalter nach Anspruch 21, dadurch gekennzeichnet, daß eine Kulisse (46) im Gehäuse (21) des Schalters (20) angeordnet ist, an der der Schalthebel (45) beim Umschalten vom ersten Ruhekontakt (33) auf den zweiten Ruhekontakt (34) entlanggeführt wird, so daß das Rastelement (44) in die Verzahnung (43) an der Trommel (42) eingreift.

23. Bremsschalter nach Anspruch 22, dadurch gekennzeichnet, daß die Kulisse (46) eine untere zurückgezogene Fläche (50), eine mittlere vorgezogene Fläche (49) und eine obere zurückgezogene Fläche (48) besitzt, wobei das Rastelement (44) bei Anlage des Schalthebels (45) an der unteren zurückgezogenen Fläche (50) und der oberen zurückgezogenen Fläche (48) außer Eingriff und bei Anlage des Schalthebels (45) an der mittleren vorgezogenen Fläche (49) in Eingriff mit der Verzahnung (43) steht.

24. Bremsschalter nach Anspruch 22 oder 23, dadurch gekennzeichnet, daß ein Federelement (47) am Schalthebel (45) zur Beaufschlagung des Rastelementes (44) mit einer auf die Führung der Kulisse (46) gerichteten Kraft angeordnet ist.

25. Bremsschalter nach Anspruch 24, dadurch gekennzeichnet, daß die untere zurückgezogene Fläche (50) so dimensioniert ist, daß die Kontaktfläche (64) des Schaltkontakts (37) vom ersten Ruhekontakt (33) unverzögert eine Strecke von ungefähr 5/10 mm abhebt.

26. Bremsschalter nach Anspruch 24 oder 25, dadurch gekennzeichnet, daß die mittlere vorgezogene Fläche (49) und die Trommel (42) so dimensioniert sind sowie die Viskosität der Flüssigkeit in der Trommel (42) so gewählt wird, daß der Schaltkontakt (37) mit einer Verzögerungszeit von mindestens 10 msec vom ersten Ruhekontakt (33) auf den zweiten Ruhekontakt (34) umschaltet.

27. Bremsschalter nach einem der Ansprüche 21 bis 26, dadurch gekennzeichnet, daß die Verzahnung (43) an der Trommel (42) und das Rastelement (44) derart zusammenwirken, daß beim Umschalten des Schaltkontakts (37) vom zweiten Ruhekontakt (34) auf den ersten Ruhekontakt (33) eine Kraftkomponente auftritt, die das Rastelement (44) aus dem Eingriff in die Verzahnung (43) herauslenkt.

28. Bremsschalter nach Anspruch 27, dadurch gekennzeichnet, daß das Zusammenwirken zwischen der Verzahnung (43) und dem Rastelement (44) erzielt wird, indem der Zahn (62) der Verzahnung (43) jeweils eine schräge Flanke (51) und eine steile Flanke (52) besitzt, wobei beim Umschalten des Schaltkontakts (37) vom zweiten Ruhekontakt (34) auf den ersten Ruhekontakt (33) das Rastelement (44) mit der schrägen Flanke (51) und umgekehrt beim Umschalten vom ersten Ruhekontakt (33) auf den zweiten Ruhekontakt (34) mit der steilen Flanke (52) zusammenwirkt.

29. Bremsschalter nach Anspruch 27 oder 28, dadurch gekennzeichnet, daß die Blattfeder (30) am Schaltkontakt (37) eine derartige Vorspannung besitzt, daß beim Umschalten vom zweiten Ruhekontakt (34) auf den ersten Ruhekontakt (33) eine größere Federkraft als in der umgekehrten Bewegungsrichtung wirksam ist.

30. Bremsschalter nach Anspruch 29, dadurch gekennzeichnet, daß die Federkraft der Blattfeder (30) beim Umschalten vom zweiten Ruhekontakt (34) auf den ersten Ruhekontakt (33) wenigstens 5 mal größer als in der umgekehrten Bewegungsrichtung ist.

31. Bremsschalter nach einem der Ansprüche 16 bis 30, dadurch gekennzeichnet, daß ein weiteres als Schließer ausgebildetes Kontaktsystem (53) mit einem Ruhekontakt (54) und einem Schaltkontakt (55) im Gehäuse (21) des Schalters (20) angeordnet ist, wobei die Bewegung des Schaltkontakts (55) mit Hilfe einer Verzögerungseinrichtung gegenüber den beiden anderen Kontaktsystemen (31, 32) bei deren Umschalten vom zweiten Ruhekontakt (34, 36) auf den ersten Ruhekontakt (33, 35) verzögert ist.

32. Bremsschalter nach Anspruch 31, dadurch gekennzeichnet, daß als Verzögerungseinrichtung für das weitere Kontaktsystem (53) dieselbe Verzögerungseinrichtung (41) wie für das Kontaktsystem (31) verwendet wird.

33. Bremsschalter nach Anspruch 32, dadurch gekennzeichnet, daß die Trommel (42) im Bereich des weiteren Kontaktsystems (53) eine Verzahnung (56) besitzt, in die am Schaltkontakt (55) angeordnete Mittel formschlüssig bei Bewegung des Schaltkontaktes (55) in Richtung auf den Ruhekontakt (54) eingreifen.

34. Bremsschalter nach Anspruch 33, dadurch gekennzeichnet, daß die Mittel aus einem am Schaltkontakt (55) des weiteren Kontaktsystems (53) angelenkten Hebel (57) bestehen, mit dem wiederum ein Rastzähne (59) besitzender Rasthebel (58) gelenkig verbunden ist und an diesem Rasthebel (58) gelenkig ein drehbar an der Achse der Trommel (42) gelagerter Verbindungshebel (63) angeordnet ist, wobei die Rastzähne (59) über den Hebel (57) bei Bewegung des Schaltkontakts (55) in Richtung auf den Ruhekontakt (54) in Eingriff mit der Verzahnung (56) an der Trommel (42) gebracht werden.

## Claims

1. Braking switch, which consists of at least two change-over switches (S1, S2), for an electric motor, in particular for driving electric hand tools, such as drills, angle grinders, hedge shears and the like, in which case during motor operation at least one field winding of the electric motor is connected by way of the two change-over switches (S1, S2) in series with the armature winding to the supply voltage, so that a motor circuit is formed, during braking operation the field winding with the armature winding by way of the two change-over switches (S1, S2) forms a closed braking circuit in that one change-over switch (S1) is connected by means of a switching contact to the connection of the field winding close to the mains and switches between a contact (a1) connected to the mains pole and a contact (b1) connected by a first connection to the braking circuit and the second change-over switch (S2) is connected by means of a switching contact to the connection of the field winding remote from the mains and switches between a contact (a2) connected to the connection to the armature winding and a contact (b2) connected by a second connection to the braking circuit and at the time of the change-over from motor operation to braking operation, a time shift of the switching operations of both change-over switches (S1, S2) occurs, characterised in that on changing-over from motor operation to braking operation, the switching contact of the change-over switch (S1) close to the mains moves in a delayed manner with respect to the switching contact of the change-over switch (S2) remote from the mains and closes the braking circuit at the change-over switch (S1) close to the mains later and on changing-over from braking operation to motor operation, both change-over switches (S1, S2) open substantially synchronously, whereof the switching contacts move without delay and close the motor circuit substantially simultaneously.

2. Braking switch according to Claim 1, characterised in that when changing-over from motor operation into braking operation, the two change-over switches (S1, S2) open the motor circuit substantially synchronously, the switching contact of the change-over switch (S1) opening without delay preferably by at least 5/10 mm and only then moving with a delay.

3. Braking switch according to Claim 1 or 2, characterised in that the switching contact of the change-over switch (S2) moves without delay when changing over from motor operation to braking operation.

4. Braking switch according to Claim 1, 2 or 3, characterised in that the supply voltage for the electric motor is an alternating voltage and the switching contact of the change-over switch (S1) moves with a delay at the time of changing-over from motor operation to braking operation so that an arc occurring at the change-over switch (S1) is quenched on account of the zero passage of the phase of the supply voltage, before the switching contact reaches the contact (b1).

5. Braking switch according to Claim 4, characterised in that on changing-over from motor operation to braking operation, the switching contact of the change-over switch (S1) is delayed for at least 10 msecs. until it abuts against the contact (b1).

6. Braking switch according to one of Claims 1 to 5, characterised in that a common actuating member for the two change-over switches (S1, S2) acts on a mechanism which connects the two change-over switches (S1, S2) to each other and moves their switching contacts in the switching sequence.

7. Braking switch according to one of Claims 1 to 6, characterised in that a resistor (4) is connected in the motor circuit between the change-over switch (S2) remote from the mains and the armature winding (5), this resistor (4) being connected to the braking circuit by way of two diodes (10, 7) acting as free wheeling diodes, so that the resistor (4) serves as a series resistor at the time of motor operation and as a braking resistor at the time of braking operation.

8. Braking switch according to Claim 7, characterised in that the diode (10) is connected by its anode to the contact (b2) of the change-over switch (S2) remote from the mains and the further diode (7) is connected by its anode to the resistor (4).

9. Braking switch according to Claim 7 or 8, characterised in that a further switch (S3) is arranged parallel to the resistor (4), which switch bridges the resistor (4) in the closed state.

10. Braking switch according to Claim 9, characterised in that on changing over from motor operation to braking operation, the switching contact of the switch (S3) opens without delay and substantially simultaneously with the change-over switches (S1, S2) and on changing-over from braking into motor operation, the switching contact of the switch (S3) closes with a delay with respect to the change-over switches (S1, S2).

11. Braking switch according to Claim 10, characterised in that the further switch (S3) is connected by way of a mechanism, realising the switching sequence, to the two change-over switches (S1, S2) and a common actuating member for the change-over switches (S1, S2) and the switch (S3) acts on the mechanism.

12. Braking switch according to one of Claims 1 to 11, characterised in that braking electronics (8) are located in the braking circuit for controlling or regulating the braking current.

13. Braking switch according to Claim 12, characterised in that a further diode (9) is located in the braking circuit between the braking electronics (8) and the armature winding (5), whereof the anode is connected to the braking electronics (8).

14. Braking switch according to one of Claims 1 to 13, characterised in that a capacitor (6) serving as a starting capacitor for the braking operation is connected in parallel with the armature winding (5).

15. Braking switch according to Claim 14, characterised in that the capacitor (6) is connected between the anode of the diode (9) and the cathode of the diode (7).

16. Braking switch according to one of the preceding Claims with at least two contact systems (S1, S2) constructed as change-over switches, the two contact systems (S1, S2) consisting respectively of a first normally-closed contact (a1, a2) and a second normally-closed contact (b1, b2) as well as a switching contact (37, 38) and the switching contacts (37, 38) being able to be changed-over between the two normally-closed contacts (a1, b1 or a2, b2) by a rocker arm (29), which can again be actuated by a plunger (25), by means of a spring member (30), in which case the contacts (b1, b2) are associated with the non-actuated position of the contact system (S1, S2), the spring members (30) being arranged on the rocker arm (29) and on the switching contacts (37, 38) so that at least when changing-over from the normally-closed contacts (b1, b2; 34, 36) to the normally-closed contacts (a1, a2; 33, 35), substantially synchronous lifting of the contact surfaces (61, 64) of the switching contacts (37, 38) from the normally-closed contacts (a1, b1, a2, b2; 33, 34, 35, 36) takes place, the contact system (S1; 31) being connected to a delay device (41), by means of which the movement of the associated switching contact (37) is delayed at the time of changing-over from the first normally-closed contact (a1;33) to the second normally-closed contact (b1;34) after the completed lifting of the contact surface (64) from the first normally-closed contact (a1; 33), in which case the contact surface (61) on this switching contact (37) comes to bear against the second normally-closed contact (b1;34) later than the switching contact (38) of the other contact system (S2; 32) and the delay device (41) bringing about no essential delay at the associated switching contact (37) when changing-over from the second normally-closed contact (bl;34) to the first normally-closed contact (a1;33).

17. Braking switch according to Claim 16, characterised in that the delay device (41) consists of means connected to the switching contact (37) and a movement-impeding member, the means allowing a form-locking engagement in the movement-impeding member at the time of changing-over from the first normally-closed contact (33) to the second normally-closed contact (34).

18. Braking switch according to Claim 17, characterised in that the means connected to the switching contact (37) are constructed as a switching lever (45), which is pivoted by one side on the switching contact (37) and on its other side comprises a detent member (44).

19. Braking switch according to Claim 17 or 18, characterised in that the movement-impeding member consists of a drum (42) mounted to rotate, in which a further inner drum (60) is located, a viscous liquid being located between the drum (42) and the inner drum (60).

20. Braking switch according to Claim 19, characterised in that the viscous liquid is silicone oil.

21. Braking switch according to Claim 19 or 20, characterised in that located on the surface of the drum (42) on the side facing the contact system (31) is toothing (43), in which the detent member (44) on the switching lever (45) may engage.

22. Braking switch according to Claim 21, characterised in that a slide (46) is located in the housing (21) of the switch (20), along which slide the switching lever (45) is guided when changing-over from the first normally-closed contact (33) to the second normally-closed contact (34), so that the detent member (44) engages in the toothing (43) on the drum (42).

23. Braking switch according to Claim 22, characterised in that the slide (46) has a lower set-back surface (50), a central salient surface (49) and an upper set-back surface (48), the detent member (44) being out of engagement with the toothing (43) when the switching lever (45) abuts against the lower set-back surface (50) and the upper set-back surface (48) and being in engagement with the toothing (43) when the switching lever (45) abuts against the central salient surface (49).

24. Braking switch according to Claim 22 or 23, characterised in that a spring member (47) is located on the switching lever (45) for acting on the detent member (44) with a force directed towards the guide of the slide (46).

25. Braking switch according to Claim 24, characterised in that the lower set-back surface (50) is dimensioned so that the contact surface (64) of the switching contact (37) lifts without delay by a distance of approximately 5/10 mm from the first normally-closed contact (33).

26. Braking switch according to Claim 24 or 25, characterised in that the central salient surface (49) and the drum (42) are dimensioned and the viscosity of the liquid in the drum (42) is chosen so that the switching contact (37) changes over with a delay time of at least 10 msecs. from the first normally-closed contact (33) to the second normally-closed contact (34).

27. Braking switch according to one of Claims 21 to 26, characterised in that the toothing (43) on the drum (42) and the detent member (44) cooperate so that when changing over the switching contact (37) from the second normally-closed contact (34) to the first normally-closed contact (33), a force component occurs which deflects the detent member (44) out of engagement in the toothing (43).

28. Braking switch according to Claim 27, characterised in that the cooperation between the toothing (43) and the detent member (44) is achieved in that the tooth (62) of the toothing (43) respectively comprises an inclined flank (51) and a steep flank (52), in which case when changing over the switching contact (37) from the second normally-closed contact (34) to the first normally-closed contact (33), the detent member (44) cooperates with the inclined flank (51) and conversely when changing over from the first normally-closed contact (33) to the second normally-closed contact (34), with the steep flank (52).

29. Braking switch according to Claim 27 or 28, characterised in that the leaf spring (30) on the switching contact (37) is biased so that when changing over from the second normally-closed contact (34) to the first normally-closed contact (33), a greater spring force is active than in the reverse direction of movement.

30. Braking switch according to Claim 29, characterised in that on changing over from the second normally-closed contact (34) to the first normally-closed contact (33), the spring force of the leaf spring (30) is at least five times greater than in the reverse direction of movement.

31. Braking switch according to one of Claims 16 to 30, characterised in that a further contact system (53) constructed as a closing contact with a normally-closed contact (54) and a switching contact (55) is located in the housing (21) of the switch (20), the movement of the switching contact (55) being delayed by means of a delay device with respect to the two other contact systems (31, 32) at the time of their change-over from the second normally-closed contact (34, 36) to the first normally-closed contact (33, 35).

32. Braking switch according to Claim 31, characterised in that the same delay device (41) as for the contact system (31) is used as the delay device for the further contact system (53).

33. Braking switch according to Claim 32, characterised in that in the region of the further contact system (53), the drum (42) comprises toothing (56), in which means located on the switching contact (55) engage in a form-locking manner upon the movement of the switching contact (55) in the direction of the normally-closed contact (54).

34. Braking switch according to Claim 33, characterised in that the means consist of a lever (57) pivoted on the switching contact (55) of the further contact system (53), to which a detent lever (58) comprising detent teeth (59) is once again pivotally connected and pivoted on this detent lever (58) is a connecting lever (63) mounted to rotate on the axis of the drum (42), upon movement of the switching contact (55) in the direction of the normally-closed contact (54), the detent teeth (59) being brought by way of the lever (57) into engagement with the teeth (56) on the drum (42).

## Revendications

1. Commutateur de freinage, qui est constitué d'au moins deux commutateurs (S1,S2), pour un moteur électrique, en particulier pour l'entraînement d'outils électriques à main, comme des perceuses, meuleuses d'angle, cisailles à haies et analogues, au moins une bobine d'inducteur du moteur électrique se trouvant en série avec la bobine d'induit à la tension d'alimentation, par l'intermédiaire des deux commutateurs (S1,S2), en fonctionnement moteur, de sorte qu'un circuit moteur est formé ; en fonctionnement de freinage, la bobine d'inducteur formant avec la bobine d'induit, par l'intermédiaire des deux commutateurs (S1,S2), un circuit de courant de freinage fermé, en ce qu'un commutateur (S1) est relié, au moyen d'un contact de commutation de commande avec le raccordement, proche du réseau, de la bobine d'inducteur et commute entre un contact (a1) relié au pôle du réseau et un contact (b1) relié à un premier raccordement au circuit de courant de freinage, et le second commutateur (S2) étant relié, au moyen d'un contact de commutation de commande, au raccordement éloigné du réseau de la bobine d'inducteur et commutant entre un contact (a2) relié au raccordement vers la bobine d'induit et un contact (b2) relié à un second raccordement au circuit de courant de freinage et, lors du passage du fonctionnement moteur au fonctionnement de freinage, un décalage temporel des processus de commutation des deux commutateurs (S1,S2) ayant lieu,
caractérisé en ce que, lors du passage du fonctionnement moteur au fonctionnement de freinage, le contact de commutation de commande du commutateur (S1) proche du réseau se déplace de façon retardée par rapport au contact de commutation de commande du commutateur (S2) éloigné du réseau et commute plus tard le circuit de courant de freinage sur le commutateur (S1) proche du réseau et, lors du passage du fonctionnement de freinage au fonctionnement moteur, les deux commutateurs (S1,S2) s'ouvrent de façon généralement synchrone, leurs contacts de commutation de commande se déplacent de façon non retardée et commutent généralement simultanément le circuit moteur.

2. Commutateur de freinage selon la revendication 1,
caractérisé en ce que, lors du passage du fonctionnement moteur au fonctionnement de freinage, les deux commutateurs (S1,S2) ouvrent de façon généralement synchrone le circuit moteur, le contact de commutation de commande du commutateur (S1) s'ouvrant avantageusement d'au moins 5/10 mm de façon non retardée et ne se déplaçant qu'ensuite de façon retardée.

3. Commutateur de freinage selon la revendication 1 ou 2, caractérisé en ce que le contact de commutation de commande du commutateur (S2), lors du passage du fonctionnement moteur au fonctionnement de freinage, se déplace de façon non retardée.

4. Commutateur de freinage selon la revendication 1, 2 ou 3, caractérisé en ce que, concernant la tension d'alimentation pour le moteur électrique, il s'agit d'une tension alternative, et le contact de commutation de commande du commutateur (S1), lors du passage du fonctionnement moteur au fonctionnement de freinage, se déplace de façon retardée, de sorte qu'un arc électrique se créant sur le commutateur (S1) est éteint en raison du passage par zéro de la phase de la tension d'alimentation, avant que le contact de commutation de commande atteigne le contact (b1).

5. Commutateur de freinage selon la revendication 4,
caractérisé en ce que le contact de commutation de commande du commutateur (S1), lors du passage du fonctionnement moteur au fonctionnement de freinage, est retardé d'au moins 10 ms jusqu'à l'appui sur le contact (b1).

6. Commutateur de freinage selon une des revendications 1 à 5,
caractérisé en ce qu'un organe d'actionnement commun pour les deux commutateurs (S1,S2) agit sur une mécanique qui couple ensemble les deux commutateurs (S1,S2) et déplace leurs contacts de commutation de commande dans l'ordre de commutation.

7. Commutateur de freinage selon une des revendications 1 à 6,
caractérisé en ce qu'une résistance (4) est montée dans le circuit moteur entre le commutateur (52) éloigné du réseau et la bobine d'induit (5), cette résistance (4) étant raccordée au circuit de courant de freinage par l'intermédiaire de deux diodes (10,7) agissant comme diodes de roue libre, de sorte que la résistance (4) sert de résistance série lors du fonctionnement moteur et de résistance de freinage lors du fonctionnement de freinage.

8. Commutateur de freinage selon la revendication 7,
caractérisé en ce que la diode (10) est reliée, par son anode, au contact (b2) du commutateur (S2) éloigné du réseau et l'autre diode (7) est reliée, par son anode, à la résistance (4).

9. Commutateur de freinage selon la revendication 7 ou 8,
caractérisé en ce que, parallèlement à la résistance (4), un autre commutateur (S3) est agencé qui, dans l'état fermé, court-circuite la résistance (4).

10. Commutateur de freinage selon la revendication 9,
caractérisé en ce que, lors du passage du fonctionnement moteur au fonctionnement de freinage, le contact de commutation de commande du commutateur (S3) s'ouvre de façon non retardée et généralement simultanément avec les commutateurs (S1,S2) et, lors du passage du fonctionnement de freinage au fonctionnement moteur, le contact de commutation de commande du commutateur (S3) se ferme de façon retardée par rapport aux commutateurs (S1,S2).

11. Commutateur de freinage selon la revendication 10,
caractérisé en ce que l'autre commutateur (S3) est couplé, par l'intermédiaire d'une mécanique réalisant l'ordre de commutation, aux deux commutateurs (S1,S2) et, sur la mécanique, agit un organe d'actionnement commun pour les commutateurs (S1,S2) et le commutateur (S3).

12. Commutateur de freinage selon une des revendications 1 à 11,
caractérisé en ce qu'une électronique de freinage (8) est agencée dans le circuit de courant de freinage pour commander ou régler le courant de freinage.

13. Commutateur de freinage selon la revendication 12,
caractérisé en ce qu'une autre diode (9) est agencée dans le circuit de courant de freinage entre l'électronique de freinage (8) et la bobine d'induit (5), son anode étant raccordée à l'électronique de freinage (8).

14. Commutateur de freinage selon une des revendications 1 à 13,
caractérisé en ce qu'un condensateur (6) servant de condensateur de départ pour le fonctionnement de freinage est monté en parallèle à la bobine d'induit (5).

15. Commutateur de freinage selon la revendication 14,
caractérisé en ce que le condensateur (6) est monté entre l'anode de la diode (9) et la cathode de la diode (7).

16. Commutateur de freinage selon une des revendications précédentes, comportant au moins deux systèmes de contact (S1,S2) réalisés comme commutateurs, les deux systèmes de contact (S1,S2) étant constitués, à chaque fois, d'un premier contact de repos (a1,a2) et d'un second contact de repos (b1,b2), ainsi que d'un contact de commutation de commande (37,38), et les contacts de commutation de commande (37,38) pouvant être commutés par une bascule (29), qui peut être actionnée, à son tour, par un poussoir (25), au moyen d'un élément élastique (30) entre les deux contacts de repos (a1,b1 ou a2,b2), les contacts (b1,b2) étant associés à la position non actionnée du système de contact (S1,S2), les éléments élastiques (30) étant agencés sur la bascule (29) et sur les contacts de commutation de commande (37,38) de sorte que, au moins lors du passage des contacts de repos (b1,b2;34, 36) aux contacts de repos (a1,a2;33,35), il se produit un soulèvement généralement synchrone des surfaces de contact (61,64) des contacts de commutation de commande (37,38) des contacts de repos (a1,b1,a2,b2;33,34,35,36), le système de contact (S1;31) étant en liaison avec un dispositif de retardement (41) à l'aide duquel le mouvement du contact de commutation de commande correspondant (37) lors du passage du premier contact de repos (a1;33) au second contact de repos (b1;34), après avoir effectué le soulèvement de la surface de contact (64) du premier contact de repos (a1;33), est retardé, la surface de contact (61) sur ce contact de commutation de commande (37) venant en appui contre le second contact de repos (b1;34) plus tard que le contact de commutation de commande (38) de l'autre système de contact (S2;32) et le dispositif de retardement (41), lors du passage du second contact de repos (b1;34) au premier contact de repos (a1;33), n'effectuant aucun retard important sur le contact de commutation de commande associé (37).

17. Commutateur de freinage selon la revendication 16,
caractérisé en ce que le dispositif de retardement (41) est constitué d'un moyen en liaison avec le contact de commutation de commande (37) et d'un élément bloquant le mouvement, le moyen permettant un engagement mécanique dans l'élément bloquant le mouvement lors du passage du premier contact de repos (33) au second contact de repos (34).

18. Commutateur de freinage selon la revendication 17,
caractérisé en ce que le moyen en liaison avec le contact de commutation de commande (37) est réalisé comme levier de commutation (45) qui, d'un côté, est articulé au contact de commutation de commande (37) et, sur son autre côté, possède un élément d'encliquetage (44).

19. Commutateur de freinage selon la revendication 17 ou 18,
caractérisé en ce que l'élément bloquant le mouvement est constitué d'un tambour (42) monté rotatif, dans lequel est agencé un autre tambour interne (60), un liquide visqueux se trouvant entre le tambour (42) et le tambour interne (60).

20. Commutateur de freinage selon la revendication 19,
caractérisé en ce que, concernant le liquide visqueux, il s'agit d'une huile de silicone.

21. Commutateur de freinage selon la revendication 19 ou 20,
caractérisé en ce que, sur la surface d'enveloppe du tambour (42), sur le côté en regard du système de contact (31), il est agencé une denture (43) dans laquelle peut s'engager l'élément d'encliquetage (44) sur le levier de commutation (45).

22. Commutateur de freinage selon la revendication 21,
caractérisé en ce qu'une coulisse (46) est agencée dans le boîtier (21) du commutateur (20), le long de laquelle le levier de commutation (45) est guidé lors du passage du premier contact de repos (33) au second contact de repos (34), de sorte que l'élément d'encliquetage (44) s'engage dans la denture (43) sur le tambour (42).

23. Commutateur de freinage selon la revendication 22,
caractérisé en ce que la coulisse (46) possède une surface inférieure retirée (50), une surface médiane avancée (49), et une surface supérieure retirée (48), l'élément d'encliquetage (44) étant, lors de l'appui du levier de commutation (45) sur la surface inférieure retirée (50) et la surface supérieure retirée (48) hors d'engagement et, lors de l'appui du levier de commutation (45) sur la surface médiane avancée (49), en engagement avec la denture (43).

24. Commutateur de freinage selon la revendication 22 ou 23,
caractérisé en ce qu'un élément élastique (47) est agencé sur le levier de commutation (45) pour solliciter l'élément d'encliquetage (44) avec une force alignée sur le guidage de la coulisse (46).

25. Commutateur de freinage selon la revendication 24,
caractérisé en ce que la surface inférieure retirée (50) est dimensionnée de sorte que la surface de contact (64) du contact de commutation de commande (37) se soulève du premier contact de repos (33) de façon non retardée d'une étendue d'environ 5/10 mm.

26. Commutateur de freinage selon la revendication 24 ou 25,
caractérisé en ce que la surface médiane avancée (49j et le tambour (42) sont dimensionnés et la viscosité du liquide dans le tambour (42) est choisie de sorte que le contact de commutation de commande (37) passe du premier contact de repos (33) au second contact de repos (34) avec un temps de retard d'au moins 10 ms.

27. Commutateur de freinage selon une des revendications 21 à 26,
caractérisé en ce que la denture (43) sur le tambour (42) et l'élément d'encliquetage (44) coopèrent de sorte que, lors du passage du contact de commutation de commande (37) du second contact de repos (34) au premier contact de repos (33), il se produit une composante de force qui sort l'élément d'encliquetage (44) d'engagement dans la denture (43.

28. Commutateur de freinage selon la revendication 27,
caractérisé en ce que la coopération entre la denture (43) et l'élément d'encliquetage (44) est obtenue en ce que la dent (62) de la denture (43) possède, à chaque fois, un flanc incliné (51) et un flanc escarpé (52), lors du passage du contact de commutation de commande (37) du second contact de repos (34) au premier contact de repos (33), l'élément d'encliquetage (44) coopérant avec le flanc incliné (51) et, inversement lors du passage du premier contact de repos (33) au second contact de repos (34), coopérant avec le flanc escarpé (52).

29. Commutateur de freinage selon la revendication 27 ou 28,
caractérisé en ce que le ressort à lame (30) sur le contact de commutation de commande (37) possède une précontrainte telle que, lors du passage du second contact de repos (34) au premier contact de repos (33), une plus grande force élastique est efficace que dans le sens de déplacement inverse.

30. Commutateur de freinage selon la revendication 29,
caractérisé en ce que la force élastique du ressort à lame (30), lors du passage du second contact de repos (34) au premier contact de repos (33), est au moins cinq fois plus grande que dans le sens de déplacement inverse.

31. Commutateur de freinage selon une des revendications 16 à 30,
caractérisé en ce qu'un autre système de contact (53) réalisé comme contact de travail est agencé avec un contact de repos (54) et un contact de commutation de commande (55) dans le boîtier (21) du commutateur (20), le déplacement du contact de commutation de commande (55) étant retardé à l'aide d'un dispositif de retardement vis-à-vis des deux autres systèmes de contact (31,32) lors de leur passage du second contact de repos (34,36) au premier contact de repos (33,35).

32. Commutateur de freinage selon la revendication 31,
caractérisé en ce que, comme dispositif de retardement pour l'autre système de contact (53), il est utilisé le même dispositif de retardement (41) que pour le système de contact (31).

33. Commutateur de freinage selon la revendication 32,
caractérisé en ce que le tambour (42), dans la zone de l'autre système de contact (53), possède une denture (56) dans laquelle s'engagent mécaniquement des moyens agencés sur le contact de commutation de commande (55) lors du déplacement du contact de commutation de commande (55) en direction du contact de repos (54).

34. Commutateur de freinage selon la revendication 33,
caractérisé en ce que les moyens sont constitués d'un levier (57) articulé au contact de commutation de commande (55) de l'autre système de contact (53) avec lequel, à son tour, est relié, de façon articulée, un levier d'encliquetage (58) possédant des dents d'encliquetage (59) et, sur ce levier d'encliquetage (58), il est agencé de façon articulée un levier de liaison (63) monté rotatif sur l'axe du tambour (42), les dents d'encliquetage (59) étant amenées en engagement avec la denture (56) sur le tambour (42) par l'intermédiaire du levier (57) lors d'un mouvement du contact de commutation de commande (55) en direction du contact de repos (54).
